(19) Europäisches Patentamt
European Patent Office
Office européen des brevets

(11) EP 4 641 936 A1

(12) EUROPEAN PATENT APPLICATION

(43) Date of publication:
**29.10.2025 Bulletin 2025/44**

(21) Application number: **24171817.0**

(22) Date of filing: **23.04.2024**

(51) International Patent Classification (IPC):
***H04B 1/713*** *(2011.01)* *G01S 19/00* *(2010.01)*
*H04B 1/707* *(2011.01)*

(52) Cooperative Patent Classification (CPC):
**H04B 1/713; H04B 7/18513;** G01S 19/00; G01S 19/02; H04B 1/707; H04B 2201/70715

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Airbus Defence and Space GmbH**
**82024 Taufkirchen (DE)**

(72) Inventors:
- **Soualle, Francis**
  **82024 Taufkirchen (DE)**
- **Floch, Jean-Jacques**
  **82024 Taufkirchen (DE)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

# (54) DATA COMMUNICATION METHOD AND SYSTEM USING TWO HOPPED CARRIER FREQUENCIES

(57) A method for creating and processing a signal waveform, the method comprising: generating, by a first processor, two hopped carrier frequencies, wherein the two hopped carrier frequencies are symmetrical with respect to a third carrier frequency, $f_m$, and wherein a distance between the first and second hopped carrier frequencies, |second hopped carrier frequency - first hopped carrier frequency|, is pre-defined; modulating, by the first processor, the first hopped carrier frequency and the second hopped carrier frequency with a narrow-band waveform, wherein a first signal is a first outcome of the modulation on the first hopped carrier frequency and a second signal is a second outcome of the modulation on the second hopped carrier frequency, converting the modulated first and second hopped carrier frequencies to the central carrier frequency $f_0$; transmitting, by a first transceiver coupled to the first processor, the modulated first signal and the modulated second signal; receiving, by a second transceiver, the transmitted first and second signals, wherein the second transceiver is couplable to a second processor configured to process the received first and second signals; and converting, by the second processor, a first baseband of the modulated first carrier frequency to a central baseband carrier frequency, and a second baseband of the modulated second carrier frequency to the central baseband carrier frequency, wherein the conversion to the central baseband carrier frequency is configured to be applied for each hop applied to the modulated first and second carrier frequencies.

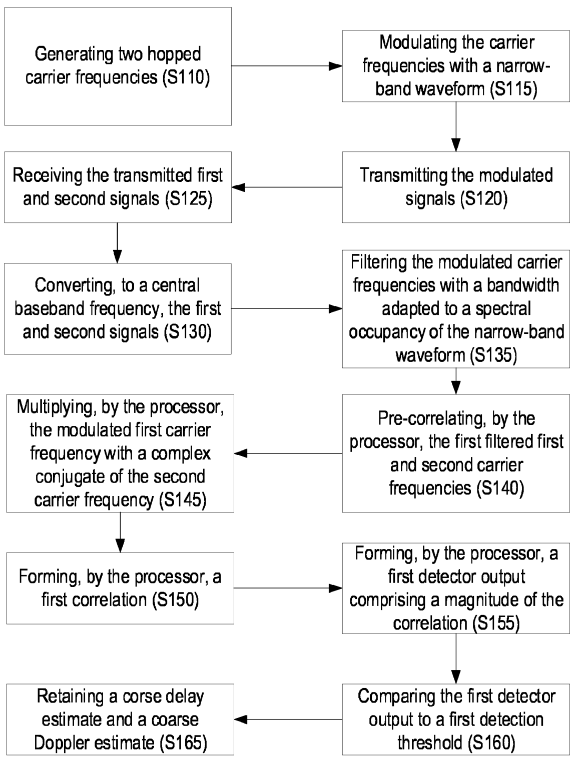


Figure 1

EP 4 641 936 A1

## Description

FIELD OF THE INVENTION

The present invention relates to a method for creating and processing a signal waveform. The method is achieved by selecting a first and a second carrier frequency, modulating the first and second carrier frequencies with a narrowband waveform to generate modulated signals, transmitting the modulated signals, receiving the transmitted first and second signals and converting the received signals. A system is also described for carrying out the method.

BACKGROUND TO THE INVENTION

The last decade has witnessed a renewed interest for Low Earth Orbit (LEO) constellations to support communication for broadband applications. Mega-Constellations such as Starlink, OneWeb or Kuiper comprising hundreds, if not thousands, of satellites represent some examples. Further announcements for upcoming systems follow almost at a monthly rate, dynamized by the introduction of the 5G Non-Terrestrial Network (NTN). Communication is not the only space application which takes benefit of this trend. Indeed, systems such as Xona, Trustpoint or Centispace, and which also comprise a large number of satellites, are currently designed to support so-called LEO Positioning-Navigation-and-Timing (LEO-PNT). Contrarily to the well-established Global Navigation Satellite Systems (GNSS) such as GPS, Galileo or Beidou operating on a Medium Earth Orbit (MEO) 25000-30000km altitude, LEO satellites' altitudes typically vary between 500 and 1200km. Another, main differentiator between GNSS and LEO-PNT system is related to the operational frequencies which not only cover the native L-Band of the GNSS, but also alternative frequencies either in the lower part of the spectrum (VHF, UHF) or the higher part (S-, C-, Ku or even Ka-Band). These alternative frequencies offer new degrees of freedom for the signal design, and especially satisfy a new demand from the end-application sectors, such as Internet-of-Things, Automotive, or other Mass-Market applications. Nevertheless, some signal design constraints, also motivated by chipset manufacturers, who still ask for a certain continuity and interoperability of the proposed LEO-PNT signal waveforms with the GNSS ones, can motivate maintaining the application in a form of Code Division Multiple Access (CDMA). Hence, alternative waveforms, still inheriting of the CDMA features, are proposed, such as the Frequency Hopping Code Division Multiple Access (FH-CDMA), and Orthogonal Frequency Division Multiplex-Code Division Multiple Access (OFDM-CDMA) schemes. Thanks to their wide bandwidth, such CDMA related waveforms are usually suited to enhance accuracy but also robustness against non-intentional or intentional interferences, through the so-called de-spreading process. However, a wider bandwidth typically results in a more complex acquisition step aiming at coarsely estimating both delay (i.e. code) and Doppler state information from the received signal. As an example, a Matched Filter acquisition approach applying a replica having the same waveform as the FH-CDMA may result in a very narrow correlation function, which forces testing a larger number of delay, or equivalently, code hypotheses, resulting from the higher granularity for the code search space, and which directly impacts the computational effort of the user device in an unfavorable manner. Furthermore, Multi-Carrier (MC) and OFDM waveforms are proposed for the new generation of Broadband LEO-communication systems, under the impulse of the 3GPP (3rd Generation Partnership Project) initiative for 5G non-terrestrial networks (5G NTN). Such waveforms share similarities to the CDMA waveforms, and notably can also offer the large bandwidths necessary for precise ranging, and can therefore also support positioning applications.

Considering the above, the application of FH-CDMA or OFDM-CDMA, but also MC and OFDM, waveforms for a LEO-PNT signal may also show two degrading effects on the acquisition performance and/or complexity. Firstly, the larger Doppler caused by the lower satellite altitude may increase the number of Doppler hypotheses to be tested with one higher order of magnitude when compared to GNSS satellites at a Medium Earth Orbit, and transmitted in the legacy L-Band. If the carrier frequency is then increased to S-, C- or higher bands, the Doppler excursion may become even larger, therefore increasing further the number of Doppler hypotheses. Hence, in some configurations of LEO-PNT signal acquisition (e.g. defined with the spreading sequence duration, LEO satellite altitude and carrier frequency), the number of Doppler hypotheses to be scrutinized might even exceed the number of delay (i.e. code) hypotheses to be tested, a trend which has not been observed in GNSSs. Reversely, when transmitted in VHF or UHF bands, the delay caused by the pierced atmospheric ionosphere layers may also be larger than in L-band, as the ionospheric delay is inversely proportional to the squared carrier frequency. Therefore, some acquisition techniques might also suffer from this ionospheric delay.

The former assessments may be applied for open service signals, i.e. where signal structure and characteristics are publicly available through Signal-in-Space Documents (SIS-ICD). Nowadays, major threats caused by the increased vulnerability of navigation and communication systems to spoofing, meaconing and jamming attacks force adopting counter-measures to take place at the signal design level. Those attacks are particularly efficient during the GNSS signal acquisition, which represents the "Achilles' heel" of the signal processing chain due to not enough information being available to conduct plausibility checks on the actual origin of the signal. Existing techniques based on data- and/or ranging authentication are available through the use of meta data obtained after demodulation of the authentication message. Such meta data serving authentication can, for example, comprise keys, signatures, etc. Known techniques comprise the Chimera scheme being applied for the GPS L1C signals, and the TESLA scheme being applied for some specific Galileo signal components. However, these techniques cannot be applied for a cold start acquisition, i.e. when such metadata information is (still) not available, enhancing thus the vulnerability to meaconing and spoofing attacks, depending on the capability of the adversary to repeat incoming signals or to forge spoofing signals with "publicly known" spreading sequences, but also to jamming attacks.

One solution to enhance robustness to attacks during the acquisition step consists in applying a fully cyphered spreading code, which hinders the capability of signal forging, and later spoofing, due to the lack of key information necessary to generate a cyphering stream from the spoofer's side. Direct acquisition asking for massive correlation testing represents the most common technique to acquire GNSS signals modulated with fully cyphered spreading codes, and was firstly applied to GPS P(Y) signals. The chip rate associated with the cyphered stream of chips may, however, be a trade-off between robustness and acquisition complexity. GNSS signals with low chip rates simplify the acquisition performance as a smaller number of delay, or equivalently, code hypotheses need to be proposed and tested for a "brute force", i.e. Direct acquisition, scheme on the cyphered spreading code. However, a shorter chip rate results in a smaller spreading factor, which reduces robustness against narrow-band jammers. Furthermore, once acquisition has been achieved for GNSS signals with a low chip rate such signals offer reduced ranging performance. Reversely, higher chip rates may spread further the jamming power during the correlation process to enhance robustness. However, they may also increase the acquisition complexity by a large amount due to the larger number of (cyphered) code hypotheses.

In J. Anderson et al, "Cryptographic Ranging Authentication with TESLA, Rapid Rekeying, and a PRF", a scheme is proposed to strengthen both data and spreading code authentication. The scheme re-uses elements of the TESLA scheme applied for the Galileo OSNMA, but completes it by improving rapid rekeying and spreading sequences authentication. In Anderson, two variants are proposed:

The first variant considers a hypothetical GNSS signal comprising an I and a Q component with the following "specialization": The I component applies repetitive and uncyphered spreading sequences (similar to the GPS C/A or Galileo Open Service sequences) modulated with meta-data serving authentication of ranging and data of the Q component. The Q component applies cyphered spreading sequences and data which can be deciphered in a delayed manner with meta-data provided by the I component. Hence, the I channel offers real-time positioning and timing, while the Q component ensure an authenticated, but delayed positioning and timing.

The second variant considers another hypothetical GNSS signal comprising only one (I) component, and alternating the main features of both the I and Q components of the first variant in a Time-Division Multiplexing (TDM) manner. Here, the spreading sequence layer alternates between repetitive and uncyphered spreading sequences (same as the sequences applied on the I component of first option) and cyphered spreading sequences (same as the sequences applied on the Q component of first option). The data layer alternates between the meta-data serving authentication and the authenticated and cyphered navigation message.

This second variant shows the advantage of offering a singular component guaranteeing acquisition, tracking, and authenticated ranging and positioning. Thus, this signal component can be easily accommodated with other signal components (not serving authentication) modulated on the same carrier frequency and transmitted by the same satellite.

By alternating cyphered spreading sequences (called PRF in Anderson) and uncyphered spreading sequences (used for acquisition), the corresponding signal becomes more robust to spoofing attacks thanks to the cyphered sequence sections. The spreading sequence for acquisition, called "acquisition section" in Anderson simplifies acquisition by applying the same spreading code over several repetitions, and thus enables the reduction of the number of code hypotheses necessary when compared to the acquisition of the cyphered spreading sequences. The main drawback of this solution is the periodicity in the acquisition section, i.e. the corresponding spreading code is repeated over the alternations with the cyphered spreading sequences. This represents a signature or watermarking for an attacker who can recognize the corresponding acquisition section, using for example "blind detection techniques". The knowledge of this signature enables a malicious attacker to detect and jam during the next occurrence of the acquisition section, denying access to the corresponding GNSS signal.

Z. Zhou et al, "CBFH: Coherent Binary Frequency-Hopping Multiplexing for BeiDou B2 Signal", published in J. Sun et al. (eds,), China Satellite, proposes to acquire the transmitted signals with a hopping frequency carrier. It is shown that on one side, Frequency Hopping CDMA signals are more robust against jamming attacks and on the other side, offer wide bandwidth signals for improved tracking performance. Zhou proposes to make the combination of coherent and non-coherent signal acquisition to limit the complexity of wide band signals. In particular, Zhou proposes that the signal input to the acquisition detector be built by combining, in a non-coherent manner, the squared magnitude of the correlations which have been computed over a coherent integration time. However, this solution introduces major losses, such as the so-called squaring losses, degrading the acquisition performance. Furthermore, Zhou does not mention any application of cyphered spreading sequences.

Navigation Message Authentication used in, for instance, Galileo (OSNMA modulated on the E1-I/Nav message) provides receivers protection against spoofing at the navigation message level, but does not offer protection to the spreading sequence layer. Indeed, Galileo Open Service spreading sequences remain uncyphered. It is therefore possible to prepare an "attack" by forging signals with known spreading sequences, defeating both signal acquisition and tracking. The ranging authentication is also a known technique against spoofing, but is not feasible for cold start acquisition.

As stated, the Chimera scheme proposes cyphering the complete spreading sequence layer of the GPS L1-C, which is composed of different sub-sequences which are all cyphered and serve rapid or slow authentication channels. This fully cyphered spreading sequence layer, however, greatly enhances the complexity of acquisition based on such signals.

SUMMARY OF THE INVENTION

The invention is set out in the independent claims. Preferred embodiments of the invention are set out in the dependent claims.

The invention, as disclosed herein, may achieve several goals, and have numerous advantages and technical effects. These are outlined below, and throughout the present disclosure. The skilled person further understands that the described invention may achieve other goals and have further technical effects not explicitly described herein, but will be understood by the skilled person.

A first problem solved by the invention, and a corresponding technical effect, disclosed herein is the facilitation of acquisition of wide-band FH-CDMA or OFDM-CDMA signals, and aiding this facilitation by offering a higher immunity during the acquisition process to the Doppler and ionospheric delay increase observed with LEO-PNT systems. The proposed invention will be valuable not only for the acquisition of LEO-PNT signals, but also of GNSS signals, transmitted by satellites at MEO altitudes, and modulated with FH-CDMA or OFDM-CDMA waveforms, even if the Doppler or ionospheric delay increases are less pronounced. Furthermore, an additional advantage of the proposed invention, described throughout, relates to focusing on enhanced robustness against spoofing and jamming, which is also applicable to both LEO-PNT and GNSS systems.

A second problem solved by the invention, and a corresponding technical effect, is the ensuring of a robust acquisition of a protected signal, and more particularly a GNSS signal, against spoofing and jamming attacks, without degrading significantly acquisition and ranging performance.

A third problem solved by the invention is to give possibility to track signal waveforms applying the proposed scheme, in order to be robust, almost insensitive to, or greatly reduce the effect of, ionospheric delay and Doppler.

Furthermore, the proposed invention aims at designing a cyphered signal waveform whose features ensure a very robust acquisition against jamming and spoofing, but which still guarantees an acquisition for a simple receiver architecture with low complexity.

According to a first aspect, we describe a method for creating and processing a signal waveform, the method comprising: generating, by a first processor, two hopped carrier frequencies, wherein the two hopped carrier frequencies are symmetrical with respect to a third carrier frequency, $f_m$, and wherein a distance between the first and second hopped carrier frequencies, |second hopped carrier frequency - first hopped carrier frequency|, is pre-defined; modulating, by the first processor, the first hopped carrier frequency, called $f_1$ herein, and the second hopped carrier frequency, called fz herein, with a narrow-band waveform, wherein a first signal is a first outcome of the modulation on the first hopped carrier frequency and a second signal is a second outcome of the modulation on the second hopped carrier frequency, wherein the first and second hopped carrier frequencies are symmetrical with respect to a third carrier frequency, called a middle baseband frequency, $f_m$, herein, and wherein a distance between the first and second hopped carrier frequency, |second hopped carrier frequency - first hopped carrier frequency|, is pre-defined; transmitting, by a first transceiver coupled to the first processor, the modulated first signal and the modulated second signal; receiving, by a second transceiver, the transmitted first and second signals, wherein the second transceiver is couplable to a second processor configured to process the received first and second signals; and converting, by the second processor, a first baseband frequency of the modulated first carrier frequency to a central baseband carrier frequency, and a second baseband frequency of the modulated second carrier frequency to the central baseband carrier frequency, wherein the conversion to the central baseband carrier frequency is configured to be applied for each hop applied to the modulated first and second carrier frequencies.

In the present disclosure, at least one of $f_1$, $f_2$ and $f_m$ may be frequencies expressed at baseband.

In some examples disclosed herein, the first and/or second carrier frequencies may be hopped carrier frequencies. The skilled person understands how hopping frequencies function, and how hopping is applied to carrier frequencies.

In some examples disclosed herein, the selection of the middle baseband frequency, $f_m$, and the distance between the first and second hopped carrier frequencies which are used in the conversion process may depend on the tested delay hypothesis.

It is proposed to apply a waveform based on a Frequency Hopping Code Division Multiple Access (FH-CDMA) scheme. However, the skilled person understands that an OFDM-CDMA-based waveform may additionally or alternatively be applied. More specifically, it is proposed to transmit two signals applying FH-CDMA scheme, which, in some examples, show a large frequency excursion of their respective hopped carrier frequencies. This may allow for the provision of good tracking performance, once acquisition is achieved. In some examples, the respective hopped carrier frequencies $f_1$ and $f_2$ are selected with respect to specific constraints to facilitate acquisition. The constraint may be, for example, that both $f_1$ and $f_2$ be modulated with a narrow band signal. Additionally or alternatively, if a central carrier frequency, also called "RF carrier" on which the first waveform is modulated and/or converted, is transmitted within a frequency band where ionospheric effects are negligible (C-band and above, for example, or for terrestrial applications for which ionosphere does not play a role, for example) it may be possible to create a pool of hopped frequency distances $|f_1-f_2|$ and which is associated with a middle baseband frequency $f_m$. In some examples, the central carrier frequency may be known as the "nominal frequency" and may be, for example, 1575.42 MHz in the L1 band. The middle baseband carrier frequency may lie between $f_1$ and $f_2$. The first and second hopped carrier frequencies are modulated with the narrow-band signal. As an example:

- $|f_1-f_2|$=1MHz for $f_m$ = 12MHz during the first hop; and
- $|f_1-f_2|$=3MHz for $f_m$ = -4MHz during the second hop; and
- $|f_1-f_2|$=2MHz for $f_m$ = +2MHz during the third hop.
- Etc..

The skilled person understands that any suitable values may be used in the above, as long as the constraints of the independent claims are complied with. The above may be stored in a lookup table, as described herein, which is accessible by the first and/or second processor.

The two hopped carrier frequencies, $f_1$ and $f_2$, are each modulated with a narrow-band waveform such as, for example, Binary Phase Shift Keying (BPSK). In particular, the narrow-band waveform may need to occupy a bandwidth which is smaller or significantly smaller than the overall permitted and transmitted bandwidth, so that the benefit in terms of acquisition complexity reduction become advantageous with respect to other more conventional acquisition techniques applying matched filter approach. As example the narrow-band waveform bandwidth may be at least 6, 8 or 10 times smaller than the transmitted bandwidth. Alternatively, any suitable ratio between the narrow-band waveform bandwidth and the transmitted bandwidth may be used in order to achieve the goals of the disclosure as described herein. The method of choosing a ratio will be known to the skilled person, and may depend on the band being used by the user and/or the specifications of the equipment being used by said user. Additionally or alternatively, the waveform may need to comprise a simple correlation function with a single peak, like BPSK or any other suitable waveform scheme.

The two hopped carrier frequencies are symmetrical with respect to a middle baseband carrier frequency, $f_m$. This middle baseband carrier frequency may be hopped with a cyphered scheme.

Furthermore, the difference $|f_2-f_1|$, i.e the absolute value of $f_2-f_1$, may depend directly on the middle baseband carrier frequency $f_m$ and/or equivalently on the hop index m. Throughout the present description, the term $\Delta f(m)$ has the meaning of half of the distance between $|f_2-f_1|$, that is to say, $\Delta f(m)=|f_2-f_1|/2$. Throughout this description, when the dependency of $f_1$ and $f_2$ with respect to the hop index is described, m is omitted in the $\Delta f(m)$ definition, yielding to $\Delta f$, for sake of simplification, but it is to be understood that if the offset $\Delta f(m)$ is hop index dependent, then both $f_1$ and $f_2$ will also be hop index dependent ($f_1(m)$ and $f_2(m)$). The decision regarding the relationship of $\Delta f(m)$ with regards to the hop index m may mainly depend on the spectral region, i.e. the frequency band such as, for example, UHF, L-Band, C-Band, Ku-Band, etc., and may especially depend on the ionospheric impact on to the received signal. For example, for frequency bands lower than, or below, C-Band (~5GHz) it may be desirable to keep $\Delta f$ constant, $\Delta f(m)=\Delta f$ in order to take benefit of the further processing steps offering better ionospheric immunity. However, for bands showing a much milder ionospheric activity, it may be possible to let $\Delta f$ vary and depend on the hop index m, such that an unambiguous relationship between m and $\Delta f$ exists, in the form of a lookup table, $\Delta f(m)=g(m)$. This lookup table may be stored in a memory couplable to at least one of the processors and/or transceivers. The memory may be wholly physically, partially physical and partially stored in the cloud, or wholly stored in the cloud. This predefined value of $\Delta f$ as function of the hop index m may then still permit the advantageous processing of the proposed signals described herein. Having two hopped carrier frequencies which are symmetrical with respect to a middle baseband carrier frequency, $f_m$, and separated from $\Delta f(m)$ with respect to this middle baseband carrier frequency may enable the User Terminal (UT) to proceed with particular embodiments of the invention disclosed herein. As mentioned above, this may allow for robust acquisition against jamming and spoofing while maintaining a simple receiver architecture with low complexity.

In some examples, the first and second signals at carrier frequencies $f_1$ and $f_2$ may be modulated with different spreading sequences noted as $a_k$ and $b_k$, respectively, both taking the role of the primary spreading sequence layers. Alternatively, the first and second signals may be modulated with a tiered sequence structure. In the case of use of tiered sequences, each symbol of the tiered sequence is constituted of a secondary sequence layer comprising chips ($a_k$ and $b_k$) modulated with a primary sequence layer ($S_{cn}$ and $S_{dn}$). In this case, the sequence $a_k$ (respectively $S_{cn}$) is different to the sequence $b_k$ (respectively $S_{dn}$) for the first and second signals. Particular embodiments can effectively exploit the primary sequence layer in order to reduce sensitivity to the thermal noise. But still, this may reduce the vulnerability of the method to jamming and spoofing.

The first and/or second transceiver may be only a receiver, or only a transmitter.

In some examples, there may be a plurality of pairs of first and second signals. That is to say, there may be N pairs of first and second signals. Each of the N signal pairs may fulfil some, or all, of the signal design constraints disclosed herein.

If the User Terminal is used in line with the aspects described herein, as a prerequisite, it is considered that the User Terminal will proceed to the generic signal reception and conditioning steps before the processing steps which are specific to the proposed invention. Those early steps may comprise at least one of reception through an antenna, filtering, conditioning, down-converting from the RF carrier to the first baseband frequency or Intermediate Frequency (IF) carrier, and finally conversion in the digital domain with an Analogue-to-Digital Converter (ADC). The skilled person understands that this may allow for the signals to be processed in the baseband domain.

As disclosed above, after receiving the first and second signals, the method, in some examples, further comprises: down-converting, by the second processor, a first baseband frequency of the modulated first carrier frequency to the central baseband carrier frequency and up-converting a second baseband frequency of the modulated second carrier frequency to the central baseband carrier frequency, wherein the conversion to the central baseband carrier frequency is configured to be applied for each hop applied to the modulated first and second carrier frequencies. This may mean that the central baseband of each of the hopped carrier frequencies ($f_1$ and $f_2$) are modulated/converted with a narrow-band waveform. In the following, and for sake of simplification, it is considered that $f_1$ (and respectively fz) is equal to $f_m+\Delta f(m)$ (and respectively $f_m-\Delta f(m)$), so that the conversion of $f_1$ (and respectively fz) to the central baseband carrier frequency is a down-conversion (and respectively an up-conversion). The waveform may occupy a small bandwidth with respect to the overall transmitted bandwidth. For example, in the E1-Band, if the transmit bandwidth is 32MHz a narrow-band may not be larger than a 1/10 of it, so ~4MHz.

The waveform may be a Binary Phase Shift Keying, BPSK(N) waveform and where N represents the normalized chip rate, normalized to $f_{nom}$ = 1.023MCps (such as a BPSK(1) waveform, a BPSK(2) waveform), or any suitable kind of waveform showing a single peak in the correlation function. This may allow for the provision of a simple acquisition of the corresponding waveform. For example, if a BOC(1,1) waveform shows 4MHz of spectral occupancy, like the BPSK(2) waveform, so that it is in line with the 4MHz in the E1-band, this BOC signal would also have multiple peaks, which would make the acquisition of the narrowband signal more complex. However, as mentioned above, the narrow-band waveform bandwidth may be at least 6, 8 or 10 times smaller than the transmitted bandwidth. Alternatively, any suitable ratio between the narrow-band waveform bandwidth and the transmitted bandwidth may be used in order to achieve the goals of the disclosure as described herein. This up/down conversion, which may be applied for each hop, may allow for the processing of the signals (after up/down conversion) at baseband, and with a narrower bandwidth. This may mean that it is possible to reduce the noise bandwidth to this narrow-band, thereby increasing noise robustness, especially after the multiplication step described herein. The first and second signals are signals received by the second transceiver before conversion of these signals to the respective baseband frequencies via the up- and down-conversion.

In the former examples, and throughout the present specification, the term down-conversion (and respectively up-conversion) is applied when removing or wiping-off the $f_m+\Delta f(m)$ (and respectively $f_m-\Delta f(m)$) frequency component from the first (and respectively second) baseband frequency of the modulated first (and respectively second) carrier frequency. This terminology is applied as $f_m+\Delta f(m)$ is larger than $f_m-\Delta f(m)$ for a positive frequency offset $\Delta f(m)$, and will be further applied within the present specification for sake of consistency and conciseness.

In some examples, the method further comprises down-converting, by the second processor, the first baseband of the modulated first carrier frequency; and up-converting, by the second processor, the second baseband of the modulated second carrier frequency, wherein the down-conversion and the up-conversion are applied for each hop applied to the existing waveform by the first waveform

In some particularly preferred examples, after receiving the first and second signals, the method further comprises: first filtering, by the second processor, the modulated first and second carrier frequencies with a bandwidth adapted to a spectral occupancy of the narrow-band waveform, in particular, the method further comprising pre-correlating, by the second processor, the first filtered first and second carrier frequencies. This may allow for the output of the down/up converted signal and/or the received signals to be filtered with a bandwidth which may, in some examples, be adapted to the spectral occupancy of the narrow-band waveform. This may reduce the noise contribution originating from multiplication as described herein and/or general noise from the outside environment. In some examples, filtered sample streams of the down/up converted signals are pre-correlated before, for example, multiplication as described herein. In some examples, the bandwidth of the filter may be adapted in such a way that it fits the narrow-band to not lose a significant amount of power. As an example, if the narrowband waveform is a BPSK(1) with an occupancy of 2MHz with the main lobe comprising ~90% of the power, a filter of 2MHz or more may be used. In some examples, the down- and up-converting steps mentioned herein may be applied before the first filtering step.

Pre-correlation, as mentioned herein, may be advantageous in that by applying a further correlation, it may be possible to reduce the noise bandwidth even further. Before this pre-correlation, the noise bandwidth may equal the bandwidth of the narrow-band waveform (ex: 2MHz for a BPSK(1)). After pre-correlation, the bandwidth may be reduced to the inverse of the pre-correlation time (equal to the spreading code duration). For example, if short codes of 31 chips (e.g. ~0.03ms for a BPSK(1)) are considered, then a bandwidth of 33KHz may be achieved, which is lower than 2MHz. For example, if short codes of 341 chips (e.g. 0.3ms for a BPSK(1)) are considered, then a bandwidth of 3KHz may be achieved which is greatly lower than 2MHz.

In some particularly preferred examples, after receiving the first and second signals, the method further comprises: applying a bandpass filtering, by the second processor, to the modulated first and second carrier frequencies with a bandwidth adapted to a spectral occupancy of the narrow-band waveform and with a bandpass bandwidth centered at the first and second carrier frequencies, in particular, the method further comprising (pre-)correlating, by the second processor, the first filtered first and second carrier frequencies and/or applying a conversion to the central baseband carrier frequency of the bandpass filtered, possibly pre-correlated, modulated signals at the first and second carrier frequencies. As stated earlier, this conversion to the central baseband carrier frequency may take the form an down-(and respective up-) conversion for the first (and respective second) carrier frequency, considering that the first carrier frequency, $f_1$, is larger than fz in this example. The skilled person understands that, in some examples, fz may be larger than $f_1$.

In the above particularly preferred example, or indeed any other example described herein, the correlation with the first and second signals before the down- and up-conversion may be performed with a replica which is converted at the first and second carrier frequencies to ensure spectral consistency. Alternatively, in the above particularly preferred example, or indeed any other example described herein, the correlation with the first and second signals after the down- and up- conversion may be performed with a replica generated at baseband to ensure spectral consistency.

In some examples, the first filtering may additionally or alternatively comprise filtering the modulated first and second carrier frequencies with a narrow-band bandpass filter centered at $f_1$ and $f_2$. The bandpass filter may allow for the output of the down/up converted signal and/or the received signals to be filtered with a bandwidth which may, in some examples, be adapted to the spectral occupancy of the narrow-band waveform.

In some examples, after receiving the first and second signals, the method further comprises: multiplying, by the second processor, the modulated first carrier frequency with a complex conjugate of the second carrier frequency. That is to say in some particularly advantageous examples of the present specification, the sample stream originating from the first filtered and/or down-converted carrier ($f_1$) and modulated with a narrow-band waveform, with the complex conjugate of the sample stream originating from the second filtered and/or up-converted carrier (fz) may be multiplied. Alternatively, these carriers may only be filtered, may only be pre-correlated, or neither before this multiplication. As an example, one architecture according the present specification may apply the pre-correlation but not any filtering with a narrow-band filters, as the pre-correlation not only enables the de-spreading of the received signals, but also the reduction of the noise bandwidth, as a narrow-band filter would do. This multiplication may mean that the Doppler dependency is no longer a degrading factor when testing the delay hypotheses for acquisition performance. The skilled person understands that this leads to improved signal acquisition.

In some examples, the method further comprises forming at least two correlations, by the second processor, by correlating the output of the multiplication with at least two replicas generated for a delay hypothesis derived from an estimated delay hypothesis, wherein the at least two correlations are delayed or advanced to produce different Early and Late correlator channels for the generation of a Delay Lock Loop Discriminator; and multiplying the modulated first carrier frequency with the modulated second carrier frequency without application of a complex conjugate operation; and forming a further correlation, by the second processor, by correlating the output of the multiplication of the modulated first carrier frequency with the modulated second carrier frequency without application of a complex conjugate operation, with a further corresponding replica generated for a delay hypothesis derived from the from the estimated delay hypothesis to produce a Prompt correlator channel for the generation of a Phase Lock Loop Discriminator and/or a Frequency Lock Loop Discriminator, wherein the further correlation and the further replica are different from the at least two correlations and the at least two replicas; and estimating, by the second processor, a code delay, a phase and a frequency of the received first and second signals based on the generated Delay Lock Loop Discriminator, Phase Lock Loop Discriminator and/or Frequency Locked Loop Discriminator

In some examples, the method further comprises: forming a first correlation, by the second processor, by correlating the output of the multiplication with a known replica generated for a tested delay hypothesis; forming, by the second processor, a first detector output comprising a magnitude of the first correlation; comparing, by the second processor, the first detector output to a first detection threshold; retaining, by the second processor, a coarse delay estimate if:

a) the first detector output exceeds the first detection threshold; or
b) repeating the formation of the first correlation, the formation of the first detector output and the comparison of the first detector output for another tested delay hypothesis if the first detector output does not exceed the first detection threshold; multiplying, by the second processor, the modulated first carrier frequency with the modulated second carrier frequency without application of a complex conjugate operation and the formation of the first correlation by applying the retained coarse delay estimate; forming a second correlation, by the second processor, by correlating the output of the first correlation with an exponential including a tested Doppler hypothesis; forming, by the second processor, a second detector output comprising a magnitude of the second correlation; comparing, by the second processor, the second detector output to a second detection threshold; and retaining, by the second processor, the coarse Doppler estimate if:

c) the second detector output exceeds the second detection threshold; or

d) repeating the formation of the second correlation, the formation of the second detector output and the comparison of the second detector output for another tested Doppler hypothesis if the second detector output does not exceed the second detection threshold. That is to say, the output of the multiplication, in some examples from both streams, may be correlated with a known replica applying a tested delay (i.e. code) hypothesis. The delay (i.e. code) hypothesis may depend on a typical code search for acquisition. Where the delay (i.e. code) uncertainty domain depends on the a priori uncertainty, the relative distance between satellite and user terminal, implying a propagation delay, may be used as a basis for the delay hypothesis. In a worst-case scenario, all of the delay, or equivalently, code hypotheses may need to be tested. The replica may be generated with a spreading sequence obtained with the product of the spreading sequences modulated on the first and second signals. Furthermore, the overall number of code hypotheses may not only depend on the delay uncertainty, but also on the number of code hypotheses to be tested per chip waveform, which depends on the permitted code mis-alignment losses. Finally, the delay hypothesis may not only be translated into a code delay hypothesis used to offset the (spreading code) replica accordingly, but also into an offset of the middle baseband carrier frequency $f_m$ and the offset $\Delta f_m$, as for both FH-CDMA and OFDM-CDMA signals, both the code and frequency hopping schemes are rigidly tied. In some examples, a detector output may be formed by taking the magnitude (or absolute value squared or magnitude squared) of the correlation. The comparison of the detector output with a first detection threshold may be set according to a specific probability of missed-detection and false alarm, which may support the decision for the tested code hypothesis. The probability of detection and false alarm may impact the typical mean time to acquire. For example, if the first detection threshold is set too low (corresponding to, for example, a PFA of 10%), it may mean that the threshold may be exceeded once every 10 times by a signal originating from noise, rather than the signals that are wished to be acquired. This may then impact/delay the acquisition time. If the threshold is set too high, the probability to see the peak is reduced, as the peak has a lower likelihood of exceeding the threshold. Therefore, the first detection threshold may be set in order to balance these two effects. The correlation function obtained in this process may be similar to one of a CDMA signal modulated with a BPSK waveform and showing a broader peak than the original FH-CDMA, or OFDM-CDMA, signal, or OFDM signals. This broader correlation peak may allow for a reduction in the number of code hypotheses to be tested, when compared to a matched filtered acquisition.

Furthermore, in relation to the above-mentioned features, and the features mentioned below, the fact that both hopped carrier frequencies $f_1$ and $f_2$ may be separated by a constant interval $2\times\Delta f$ over the complete correlation duration may enable the suppression of the ionospheric contribution in the detector output. For bands showing a much milder ionospheric activity, it may be possible to let $\Delta f$ vary and depend on the hop index m, such that an unambiguous relationship between m and $\Delta f$ exists, in the form of a lookup table, $\Delta f(m)=g(m)$. This lookup table may be stored in a memory couplable to at least one of the processors and/or transceivers. The memory may be wholly physically, partially physical and partially stored in the cloud, or wholly stored in the cloud. This predefined value of $\Delta f$ as function of the hope index m may then still permit the advantageous processing of the proposed signals described herein.

As for the acquisition of the delay (i.e code) hypothesis based on the comparison of the first detector output with a first detection threshold, the setting of the second detection threshold, which is compared to the second detector output, may have to fulfill a balance between the probability of false alarm and the probability of detection for the tested Doppler hypotheses. Furthermore, an overall optimum for the allocation of the PFA and PD for the tested delay (i.e. code) hypothesis and the PFA and PD for the tested Doppler hypothesis may be performed. More precisely, the optimum may be performed by accounting for the overall number of delay (i.e. code) hypothesis and Doppler (hypothesis) tested separately, and to the joint PFA and PD applicable to the delay (i.e. code) and Doppler acquisition. The skilled person understands that any suitable allocation of the corresponding PFA and PD levels for delay (i.e. code) and Doppler testing and the resulting threshold derivation may be used.

The present disclosure also allows for a fast acquisition with a minimum overall number of delay (i.e. code) and Doppler hypotheses being tested, thereby making the receiver acquisition processing less complex, but robust against spoofing.

In some examples, once acquisition has been achieved, the second processor may also aim at estimating precisely the code delay, carrier phase and frequency of the received signal. For this it will apply the coarse code and Doppler hypotheses estimated from the acquisition phase to enter firstly into a Pull-In, and then into a tracking phase. In conventional receiver architectures, applying scalar tracking structures, several, or any suitable number of correlation functions may be calculated for delays or advances with respect to the prompt correlator channel, and fed to a Delay Locked Loop (DLL) for code delay estimation, to a Frequency Locked Loop (FLL) for carrier frequency estimation and/or to a Phase Locked Loop (PLL) for carrier phase and frequency estimation of each single received signal. Each of those correlation functions is obtained with a replica which is an offset version of the replica generated for the prompt correlator channel derived from the code delay estimated by the DLL. These correlation functions applied for suitable additional delays (atop the one estimated by the DLL) may be calculated based a similar architecture to the delays disclosed herein in relation to acquisition. As for the acquisition architecture, when generating a correlator output corresponding to a specific code delay value, it may not only be necessary to offset the replica according to this value, but also to apply the middle baseband frequency carrier $f_m$ and also the offset $\Delta f(m)$ corresponding to the corresponding delay estimation, during the down- and up-conversion processes, as for both FH-CDMA and OFDM-CDMA signals, both the code and frequency hopping schemes are rigidly tied. The different correlation output, called Early and Late correlator channels may serve for the production of a so called "discriminator" which is a key element of any DLL. An example of simple discriminator is the non-coherent "Early minus Late" discriminator which is obtained by computing the difference between the squared absolute value of an early correlation function and the squared absolute value of a late correlation function. The distance or spacing between the early or late correlators with respect to the prompt may be a parameter that depends on the receiver configuration, wherein the smaller this parameter is and the better, also considering limitations due to the finite sampling frequency. Typical values for such a parameter are 0.5 chip for low-grade receivers, such as mass-market receivers, and 0.05 chip for high-end receivers. Other discriminators may be the Double-Delta, which is built with two-pairs of early and late correlators computed for two different values of the distance with respect to the prompt channel. In addition to the DLL, a PLL aiming at estimating the phase and frequency of the received signal may also be fed with the prompt correlator channel and apply a specific phase discriminator, such as an atan() or asin() one. A FLL may also be fed with the prompt channel to estimate the frequency carrier directly proportional to the received Doppler.

Some adaptations to conventional code delay, carrier phase and frequency locked loops, justified by the particularities of the proposed signal processing scheme, may be necessary and outlined herein. Firstly, the signal phase and frequency (Doppler) information of the output of the complex multiplication between the output of the down- and up-conversion branches (one of both being complex conjugate), possibly followed by an adapted filter, vanishes. Therefore, and contrarily to a conventional GNSS receiver, it may not necessary to multiply the output of the complex multiplication and adapted filter with the sine and cosine functions generated with the output of the carrier (or frequency) loop NCO to de-wipe the corresponding carrier phase and frequency information to generate the Early and Late correlator channels used to generate the non-coherent discriminator of the DLL. Here, only the real and imaginary parts may be necessary for the application to the aforementioned output to produce the so-called In-Phase and Quadrature Phase components necessary to generate the Early and Late correlator channels used to generate the non-coherent discriminator of the DLL. Secondly, because the phase and (Doppler) frequency information disappears from the output of the complex multiplication and possible adapted filter, the PLL or FLL may then not be able to estimate the signal carrier and (Doppler) frequency information. In order to avoid this situation, no complex conjugate operation may be applied to one of the Down- or Up- conversion branches before application of the complex multiplication and possible adapted filter to generate the Prompt correlator channel necessary for PLL or FLL discriminator calculation.

In order to produce each delay or advanced correlator channel, each correlator channel may be obtained by applying at least one of the aforementioned processing steps introduced for the acquisition with the down/up conversion, the low-pass filtering, the complex conjugate multiplication and finally the correlation with a replica, as mentioned herein, wherein the replica has been delayed or advanced according to the specific Early or Late correlator channel configuration. Additionally or alternatively, it may be possible to proceed to a high-pass filter of each channel processing the $S_1$ and $S_2$ signals, and then proceed to the down- and up-conversion of the filtered signals. Additionally or alternatively, it may also be possible to introduce a pre-correlation step, as is described herein. In such a case, the replica necessary to feed the pre-correlation may also delayed or advanced according to the specific Early or Late correlator channel configuration. Additionally or alternatively, the adapted filter may be applied after the complex multiplication described herein. The role of the corresponding adapted filter is to suppress potential interfering signals which are also comprised in the received signals.

In some examples, the FH-CDMA scheme is adapted with an application of a cyphering scheme to a hopped frequency domain and a spreading code domain of said FH-CDMA scheme. The cyphering may be applied in the hopped frequency domain (resultantly, the apparent "walk" of both hopped frequencies appears unpredictable) and/or in the spreading code domain (resultantly, the corresponding spreading sequence symbols, also called chips, are cyphered). Varying the carrier frequency through a specific and cyphered hopping scheme, not accessible to non-authorised and possibly malicious users, offers another dimension for robustness in addition to the cyphering of the spreading sequences. It thus may complexify the tasks of the spoofer/jammer, especially when considering the capabilities offered by quantum computers. Hence, despite the signal being transmitted over a large bandwidth to be robust against jamming, it may also allow for a fast acquisition with a minimum of delay (i.e. ode) and Doppler hypotheses being tested.

In some examples, the first signal to be down-converted is defined by the equation:

$$S_1(t-\tau) = A_1 e^{j\varphi_1} \sum_{m=1}^{M} \propto_m d_1(t-\tau) e^{j2\pi(\Delta f_m + f_m + f_{d_m})(t-\tau-\tau_{Iono}(f_0+f_m+\Delta f_m))} p(t-\tau) \otimes \sum_{k=\frac{(m-1)N_c}{M}+1}^{\frac{mN_c}{M}} a_k \delta(t-kT_c)$$

and the second signal to be up-converted is defined by the equation:

$$S_2(t-\tau) = A_2 e^{j\varphi_2} \sum_{m=1}^{M} \propto_m d_2(t-\tau) e^{j2\pi(-\Delta f_m + f_m + f_{d_m})(t-\tau-\tau_{Iono}(f_0+f_m-\Delta f_m))} p(t-\tau) \otimes \sum_{k=\frac{(m-1)N_c}{M}+1}^{\frac{mN_c}{M}} b_k \delta(t-kT_c)$$

where:

M: number of hops during an integration time;
$N_c$: number of cyphered chips during the integration time;
$T_c$: chip period;
$f_m$: middle baseband carrier frequency for the hop index m;
$\Delta f_m$: offset frequency relative to the central frequency carrier $f_m$, wherein the absolute value of the offset $\Delta f_m$ depends of the middle baseband carrier frequency $f_m$ and/or on the hop index m, where $\Delta f_m$= g(m), and where g is a function relating the offset $\Delta f_m$ to the hop index m;
$\tau$: delay between a satellite and a receiver;
p: chip pulse shape;
$f_{dm}$: Doppler of the respective signal at frequency $f_m$+ $\Delta f_m$;
$\varphi_1$: initial phase offset of the first signal at transmission;
$\varphi_2$: initial phase offset of the second signal at transmission;
$A_1$: amplitude of the first signal;
$A_2$: amplitude of the second signal;
$d_1$: data of the first signal;
$d_2$: data of the second signal;
$a_k$: kth chip of the first signal;
$b_k$: kth chip of the second signal;
$\alpha_m$: 1 or 0 to define potential discontinuity; and
$\tau_{Iono}(f)$: contribution of the ionospheric effect at carrier f, and is given by the corresponding expression:

$$\tau_{Iono}(f)[S] = -\frac{40.3 \times TEC}{c_0 \times f^2}$$

where:

TEC: total electron count; and
$c_0$: speed of light.

The above signals may be based on the use of two Direct Sequence CDMA Frequency-Hopped (DS/FH) interplexed signals, with said signals being represented by $S_1$ and $S_2$. Should $S_1$ and $S_2$ be simultaneously transmitted, there may be no $\tau$ term, no ionospheric term $\tau_{Iono}(f)$ and no Doppler term $f_{dm}$, in the equations described herein. Said signals may be transmitted symmetrically with respect to a sequence of frequency carriers by the first transceiver. At reception, the two signals $S_1$ and $S_2$ can be expressed as above. The above may also allow for any hypothesis on the Doppler to not be applied when, for example, the received signal is correlated. In this way, the hypotheses in the delay (and equivalently code) dimension can be tested separately to the hypotheses in the Doppler dimension. This may represent a significant reduction of the complexity of the method and scheme when compared to conventional acquisition schemes for which both delay and Doppler hypotheses are tested simultaneously, rather than sequentially.

In some examples, in low operational frequencies, $\Delta f_m$ may be constant, where

$$|\Delta f_m| = \Delta f.$$

In some examples, the first signal and/or the second signal is transmitted in a continuous or discontinuous manner, in particular wherein the first and second signals are transmitted with a random sleep cycle time sequence. The parameter $\alpha_m$ introduced in the expressions of $S_1$ and $S_2$ enables to define the sleeping duty cycle. In the discontinuous case, no signals may be transmitted for some epochs. In particular, if the first signal and/or the second signal is transmitted in a discontinuous manner, the signal may be transmitted during an "on" period, and not transmitted during an "off" period. In some examples, when both the first and second signals are discontinuous, both signals are transmitted simultaneously during an "on" period, and not transmitted during an "off" period. Discontinuous transmission of at least one of the first and second signals may comprise some particular advantages. When both signals are transmitted during the "on" period, the objective of improving acquisition may be achieved, even if tracking could also be done during this period. During the "off" period, there may be two options, either nothing is transmitted, or other signals, considering that two signals may still need to be transmitted, may be transmitted but without any constraints being applied to these additional signals. These periods may be used like the TESLA scheme for tracking and data provision. If OFDM signals are used, it can also be considered that some frames may apply the proposed constraints between the signals $S_1$ and $S_2$, while other frames would not.

An advantage of the "random sleep" sequence may be like those seen in the TESLA scheme. It is to be understood that in the "random sleep" sequence, during the "off" period, nothing may be transmitted that improves robustness against a jammer or a spoofer, as said jammer/spoofer may ignore the sequencing of sleep periods. In such a case, the tracking, should it be used, may only have to be covered by the $S_1$ and $S_2$ signals transmitted during the "on" periods. This may not only allow for robust acquisition, but also for robust tracking. Additionally or alternatively, during "off" periods, other signal components $S_3$ and $S_4$, which don't have to fulfill the imposed constraints, and which enable the improvement of some other performance, may be transmitted. This other performance may relate to tracking, robustness to jamming/spoofing during a tracking phase, or any other suitable performance or parameter.

In some examples, after receiving the first and second signals, the method further comprises: frequency converting, by the second processor, the first and second signals via down-converting the first signal and up-converting the second signal, based on the middle baseband carrier frequency and the offset frequency, which may depend on the delay hypothesis to be tested during acquisition; second filtering, by the second processor, the frequency converted signals by applying a bandwidth accounting for a chip rate of the frequency converted signals; multiplying, by the second processor, the second filtered first signal with a complex conjugate of the second filtered second signal; correlating, by the second processor, the output of the multiplication with a replica generated by the second processor via the use of a tested code hypothesis, which may directly depend on the delay hypothesis; and calculating, by the second processor, a magnitude of the output of the correlation. That is to say, the received signal may be split into 2 branches through an down conversion (with $f_m+\Delta f_m$) and a up conversion (with $f_m-\Delta f_m$) based on the knowledge of the hopping carrier frequency $f_m$ for the hop, and the offset frequency $\Delta f_m$ depending on m. These branches may be further filtered via a bandwidth accounting for the chip rate. In some examples, the bandwidth may be chosen in such a way that it fits the narrow-band to not lose a significant amount of power. As an example, if the narrowband waveform is a BPSK(1) with an occupancy of 2MHz with the main lobe comprising ~90% of the power, a filter of 2MHz or more may be used. The output of the first branch relating to one of the converted signals may be multiplied with the conjugate of the output of the other branch. The output of the multiplication may then be correlated with a replica generated for a given tested code hypothesis which may directly depend on the delay hypothesis. The magnitude of the correlation output may then be calculated.

In some examples, the correlation step comprises the equation:

$$r(t) = p^2(t) \otimes \sum_{k=0}^{N_c} a_k b_k \delta(t - kT_c - \hat{\tau})$$

where:

r(t): generated replica; and

$\hat{\tau}$: code delay hypothesis also called code hypothesis; and

the calculation step comprises the equation:

$$|CAF(\Delta\tau)| \approx |CCF_{p^2}(\Delta\tau)|$$

where:

CAF: Cross-Ambiguity Function, wherein the CAF may be used for a validation for the proposed tested code hypothesis, and wherein the CAF is compared with a first detection threshold configured to be set according to a specific probability of missed detection and/or false alarm; and
CCF: Cross Correlation Function.

The output of the multiplication is correlated with a replica generated for a given tested code delay hypothesis, $\hat{\tau}$, and the CAF may serve as a validation for the proposed tested hypothesis. The comparison of the detector output with a first detection threshold may be set according to a specific probability of missed-detection and false alarm, via the CAF, and may support the decision for the tested code hypothesis. The probability of missed detection and false alarm may impact the typical mean time to acquire. For example, if the first detection threshold is set too low (corresponding to, for example, a PFA of 10%) it may mean that the threshold may be exceeded once every 10 times by a signal originating from noise, rather than the signals that are wished to be acquired. This may then impact/delay the acquisition time. If the threshold is set too high, the probability to see the peak is reduced, as the peak has a lower likelihood of exceeding the threshold. Therefore, the threshold may be set in order to balance these two effects. The skilled person understands that any suitable threshold may be used.

In some examples, after receiving the first and second signals, the method further comprises: pre-correlating, by the second processor, the first and second signals with respective short codes, wherein the first signal to be pre-correlated is defined by:

$$S_1(t-\tau) = A_1 e^{j\varphi_1} \sum_{k=1}^{N_C} a_k \sum_{m=\frac{(k-1)M}{N_C}}^{\frac{kM}{N_C}} d_1(t-\tau) e^{j2\pi(\Delta f_m + f_m + f_{d_m})(t-\tau)} p(t-\tau) \otimes \sum_{n=\frac{(m-1)N_S}{M}+1}^{\frac{mN_S}{M}} Sc_n\, \delta(t-nT_c)$$

and the second signal to be pre-correlated is defined by:

$$S_2(t-\tau) = A_2 e^{j\varphi_2} \sum_{k=1}^{N_C} b_k \sum_{m=\frac{(k-1)M}{N_C}}^{\frac{kM}{N_C}} d_2(t-\tau) e^{j2\pi(-\Delta f_m + f_m + f_{d_m})(t-\tau)} p(t-\tau) \otimes \sum_{n=\frac{(m-1)N_S}{M}+1}^{\frac{mN_S}{M}} Sd_n\, \delta(t-nT_c)$$

where:

M: number of hops during an integration time;
$N_c$: number of cyphered chips during the integration time;
$T_c$: chip period;
$f_m$: middle baseband carrier frequency for the hop index m;
$\Delta f_m$: offset frequency relative to the middle baseband frequency carrier $f_m$, wherein the absolute value of the offset $\Delta f_m$ depends on the middle baseband carrier frequency $f_m$ and/or on the hop index m, where $\Delta f_m = g(m)$, and where g is a function relating the offset $\Delta f_m$ to the hop index m;
$\tau$: delay between a satellite and a receiver;
p: chip pulse shape;
$f_{dm}$: Doppler of the respective signal at frequency $f_m + \Delta f_m$;
$\varphi_1$: initial phase offset of the first signal at transmission;
$\varphi_2$: initial phase offset of the second signal at transmission;
$A_1$: amplitude of the first signal;
$A_2$: amplitude of the second signal;
$d_1$: data of the first signal;
$d_2$: data of the second signal;
$a_k$: kth chip of the first signal;
$b_k$: kth chip of the second signal;

$\alpha_m$: 1 or 0 to define potential discontinuity;
$N_s$: a length of the short codes;
$S_{cn}$: $n^{th}$ chip of the short code for the first signal; and
$S_{dn}$: $n^{th}$ chip of the short code for the second signal.

When applying a pre-correlation, then the correlation step applied to the output of the multiplication between the output of the two branches, one being complex conjugate, may be carried out with a replica generated with the product of the secondary codes described herein. In order to reduce undesired noise contributions, the noise bandwidth may be reduced before, for example, the multiplication step. For this purpose, a pre-correlation with very short code ($Sc_n$ and $Sd_n$) is applied. Additionally or alternatively, this may allow for the ionospheric delay vanishing from the output of the method. Alternatively, short codes may be used, or codes of any suitable length. This pre-correlation may enable for the reduction of the noise bandwidth from, for example, MHz (2 MHZ for a BSPK(1)) down to a few KHz (the inverse of the short code duration). This reduction may improve the acquisition performance for the method and system described herein obtained via complex multiplication as mentioned herein. The short code, taking the role of the primary code, is preferably periodic and/or modulated with another code, called a secondary code which may be random and/or generated with a cyphering algorithm. Therefore, if the length of the short code is too long, the secondary code may have a lower rate of cyphered chips, which can have some negative consequences with respect to robustness to spoofers. So, the code length may be chosen such that there is a suitable trade-off between acquisition performance and robustness against spoofers.

In some examples, in low operational frequencies, $\Delta f_m$ may be constant, where $|\Delta f_m| = \Delta f$.

In some examples, the method further comprises: third filtering, by the second processor, the first and second signals with a bandpass filter by applying a bandwidth adapted to a spectral occupancy of the narrow-band waveform and a bandpass bandwidth centered at the first and second carrier frequencies; fourth converting the third filtered signals via down-converting the first filtered signal and up-converting the second filtered signal; in particular further pre-correlating, by the second processor, the filtered and converted first signal and the filtered and converted second signal; multiplying, by the second processor, the filtered and converted first signal with a complex conjugate of the filtered and converted second signal; and calculating, by the second processor, a magnitude of the output of the correlation. That is to say, the received signal may be split into 2 branches through an down conversion (with $f_m+\Delta f_m$) and a up conversion (with $f_m-\Delta f_m$) based on the knowledge of the hopping carrier frequency $f_m$ for the hop, and the offset frequency $\Delta f_m$. These branches may be further bandpass filtered via a bandwidth accounting for the chip rate. In some examples, the bandwidth may be chosen in such a way that it fits the narrow-band to not lose a significant amount of power. As an example, if the narrowband waveform is a BPSK(1) with an occupancy of 2MHz with the main lobe comprising ~90% of the power, a filter of 2MHz or more may be used. The output of the first branch relating to one of the converted signals may be multiplied with the conjugate of the output of the other branch. The magnitude of the correlation output may then be calculated. In some examples, the correlation step comprising correlating the output of the multiplication with a generated replica may also apply to the above example.

In some examples, the multiplying step comprises the equation:

$$S_N(t-\Delta\tau)S_P(t-\Delta\tau)^* = A_1A_2d_1(t)d_2(t)e^{(j(\varphi_1-\varphi_2))}CCF_p{}^2(t) \otimes \sum_{k=0}^{N_c} a_k b_k \delta(t-kN_sT_c-\Delta\tau)$$

where:

$S_N$: the fourth filtered first signal;
$S_P$: the fourth filtered second signal; and
CCF: Cross Correlation Function; and
the calculation step comprises the equation:

$$|CAF(\Delta\tau)| \approx \left|CCF_{CCF_p{}^2}(\Delta\tau)\right|$$

In the above equations, the contribution of the ionosphere delay is not shown for simplicity of representation. However, the same mathematical developments could show the corresponding ionospheric delay vanishing from the detector output as shown above for the "Spectral Folded Acquisition with Pre-Conversion to Baseband" concept.

The output of the multiplication is correlated with a replica generated for a given tested code delay hypothesis, and the CAF and CCF may serve as a validation for the proposed tested hypothesis. The comparison of the detector output with a first detection threshold may be set according to a specific probability of missed-detection and false alarm, via the CAF and CCF, and may support the decision for the tested code hypothesis. The reduction of noise and/or multipath via use of the pre-correlation may lead to the CAF being limited by the CCF. The probability of missed detection and false alarm may impact the typical mean time to acquire. For example, if the first detection threshold is set too low (corresponding to, for example, a PFA of 10%) it may mean that the threshold may be exceeded once every 10 times by a signal originating from noise, rather than the signals that are wished to be acquired. This may then impact/delay the acquisition time. If the threshold is set too high, the probability to see the peak is reduced, as the peak has a lower likelihood of exceeding the threshold. Therefore, the threshold may be set in order to balance these two effects. However, any suitable threshold may be used as deemed suitable by the user.

In some examples, a subset of the first and/or second signals are modulated with a known data pattern, the method further comprising: selecting, by the first processor, the subset of first and/or second signals; ignoring, by the second transceiver, the subset of first and/or second signals, wherein the entirety of the first and second signals are symmetrical with respect to the third carrier frequency. This may be used in, for example, OFDM schemes, or combined with any of the aspects described herein.

Contrarily to FH-CDMA signals, which transmit only a subset of carriers modulated with the pulse shape, p(t), OFDM signals exploit and transmit all carriers, called sub-carriers in a 5G context. Nevertheless, to ensure satisfactory acquisition and tracking of the OFDM signals some specific sub-carriers may not be modulated with "random" data, but rather with a known data pattern. Such sub-carriers modulated with known sequences are called pilot sub-carriers. The above features may consist of selecting such pilot sub-carriers, ignoring the sub-carriers modulated with data, while still satisfying the symmetry between the pair of sub-carriers with respect to a central sub-carrier. The data of the sub-carriers may be real data, and not pseudo-data. The other sub-carriers may be used for the communication traffic, while the non-ignored sub-carriers are the sub-carriers described herein, and may be used to initiate the link in, for example, acquisition and/or tracking etc. By doing so, and ignoring the sub-carriers dedicated to the communication, it may be possible to apply the above-mentioned feature to the first aspect.

In some examples, where a subset of the first and/or second carrier frequencies are modulated with a known data pattern, the method further comprising: selecting, by the first processor, the subset of first and/or second carrier frequencies; ignoring, by the second transceiver, the subset of first and/or second carrier frequencies, wherein the entirety of the first and second carrier frequencies are symmetrical with respect to the third carrier frequency.

According to a second aspect, we describe a system comprising: a first transceiver and a second transceiver; a first memory couplable to the first transceiver and a second memory couplable to the second transceiver; and a first processor couplable to the first memory and first transceiver, and a second processor couplable to the second memory and second transceiver, wherein the first and second processors are configured to undertake the method steps of the first aspect. This system may use any known processor and/or memory and/or receiver.

Advantages of the present disclosure may be as follows:

- To ensure immunity of the method and/or system to ionospheric delay
- To ensure immunity of the method and/or system detector for delay hypothesis testing to Doppler
- The large bandwidth of the FH-CDMA scheme strengthens pseudo-range tracking performance.
- The specific constraint regarding the known offset $\Delta f_m$ between each of the hopped carrier frequencies and the middle baseband carrier frequency, $f_m$, enables the implementation of a specific signal processing scheme which permits a fast acquisition with a minimum overall number of delay (i.e. code) and Doppler hypotheses being tested, therefore making the receiver acquisition processing less complex but robust against spoofing. It is to be noted that the offset $\Delta f_m$ may be constant, especially for low frequency bands where ionosphere activity is pronounced, or may depend on the hop index m for those frequency bands where ionosphere activity is milder.
- The large bandwidth of the FH-CDMA scheme strengthens robustness against jamming (by spreading the corresponding jamming power).
- The cyphering applied to both directions of the FH-CDMA scheme strengthens robustness against a spoofer/spoofing.

The cyphering applied to both directions of the FH-CDMA scheme may strengthen robustness against a spoofer/spoofing and may reduce the detectability of specific acquisition sections which could be used to jam the received signal during such sections to hinder signal acquisition.

Furthermore, the invention in the present disclosure may be extended to applications exploiting OFDM waveforms, such as, for example, 5G/6G NTN applications.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller (μC) or an array

processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device, a computer processor or a memory connected/coupled to a processor, wherein the memory can be provided with one or more programs that perform the method, when executed by the processor. Therefore, methods like swapping and paging can be deployed.

Even if some of the aspects described above have been described in reference to the method, these aspects may also apply to the system and vice versa.

Additionally, the steps of any method described herein may take place in a different order to the order described and/or some steps may take place simultaneously.

## BRIEF DESCRIPTION OF THE DRAWINGS

These and other aspects of the invention will now be further described, by way of example only, with reference to the accompanying figures, wherein like reference numerals refer to like parts, and in which:

Figure 1 shows a flow chart of a method of creating and processing a signal waveform according to an embodiment as described herein;

Figure 2 shows a flow chart of a method of creating and processing a signal waveform according to an embodiment as described herein;

Figure 3 shows a flow chart of a method of creating and processing a signal waveform according to an embodiment as described herein;

Figure 4 shows a flow chart of a method of creating and processing a signal waveform according to an embodiment as described herein;

Figure 5 shows a diagram of discontinuous transmission of two signals according to an embodiment as described herein;

Figure 6 shows a spectrogram of Frequency Hopping Code Division Multiple Access with discontinuous transmission according to an embodiment as described herein;

Figure 7 shows a flow chart of Spectral Folded Acquisition with Pre-Conversion to Baseband according to an embodiment as described herein;

Figure 8 shows a CCF of Spectral Folded Acquisition with Pre-Conversion to Baseband signal according to an embodiment as described herein;

Figure 9 shows a CAF of a Spectral Folded Acquisition with Pre-Conversion to Baseband signal according to an embodiment as described herein;

Figure 10 shows a flow chart of Spectral Folded Acquisition with Pre-Conversion to Baseband and Pre-Correlation according to an embodiment as described herein;

Figure 11 shows a flow chart of Spectral Folded Acquisition with Pre-Conversion to Baseband according to an embodiment as described herein;

Figure 12 shows a block diagram of a system for of creating and processing a signal waveform according to an embodiment as described herein; and

Figure 13 shows a block diagram of a tracking architecture of the receiver according to an embodiment as described herein

DETAILED DESCRIPTION OF THE PREFERRED EMBODIMENTS

Figure 1 shows a flow chart of a method of creating and processing a signal waveform according to an embodiment as described herein.

The method comprises generating S110 two hopped carrier frequencies which are symmetrical with respect to a third carrier frequency, $f_m$, also called a middle baseband carrier frequency herein, and wherein a distance between the first and second carrier, |second carrier frequency - first carrier frequency|, is pre-defined. The spectral support occupied by the two hoped carrier frequencies over time may have a transmit bandwidth of several 10MHz in order to offer satisfactory ranging performance, as in the L-Band, for example, where the transmit bandwidth is typically 20 to 50 MHz. In some particular examples, the middle carrier frequency $f_m$ is relative to the nominal carrier frequency $f_0$ ($f_m$= 10 MHz, $f_0$=1575.42MHz and $f_1$=11MHz, $f_2$=9MHz for $\Delta f_m$ = 1MHz).

The method further comprises modulating S115, by the first processor, the hopped carrier frequencies with a narrow-band waveform, and converting the modulated first and second carrier frequencies to the central carrier frequency $f_0$. As mentioned above, this may enable the User Terminal, UT, to proceed with particular embodiments of the invention disclosed herein. The narrowband waveform may have a frequency occupation equal to a $10^{th}$ of the transmit bandwidth, i.e. an order of magnitude smaller. Additionally or alternatively, the narrowband waveform may have a simple autocorrelation shape which may facilitate acquisition by, for example, showing only one main peak of ACF (such as BPSK or SRC signals), rather than a Binary Offset Carrier (BOC) waveform showing more ACF peaks. However, the skilled person understands that any suitable ratio between the narrowband waveform frequency and the transmit bandwidth may be used such as, for example, 1/6 or 1/8.

The method further comprises transmitting S120, by a first transceiver coupled to the first processor, the modulated first signal and the modulated second signal, resulting in a Frequency Hopping Code Division Multiple Access, FH-CDMA. The FH-CDMA signal may allow for the provision of good tracking performance, once acquisition is achieved, and may offer higher robustness against jammers, but more importantly, spoofers who may use methods such as meaconing and repeaters. The transmission may be similar to GNSS, using a broadcast transmission scheme. The transmission may comprise multibeam, as seen in SATCOM. That is to say there may be one $S_1/S_2$ signal per beam, although there may be multiple signals per beam in some examples. In some examples, the first transceiver may only be a transmitter.

The method further comprises receiving S125, by a second transceiver, the transmitted first and second signals, wherein the second transceiver is couplable to a second processor configured to process the received first and second signals. In some examples, the second transceiver may comprise a GNSS-like receiver and/or may comprise a hemispheric antenna pattern and/or a matched filter (correlation-based) processor. The second transceiver may be, or comprise, an OFDM UT terminal which may use typically known FFT techniques to retrieve at least one symbol from the sub-carrier. In some examples, the second transceiver may only be a receiver.

A first baseband frequency, derived from the received RF signal, of the modulated first carrier frequency is converted S130, by the second processor, to the central baseband carrier frequency, and a second baseband frequency, derived from the received RF signal, of the modulated second carrier frequency is converted S130 to the central baseband frequency. Throughout the present specification, whenever the term "baseband" is used, it is to be understood to mean the "baseband frequency".

The method may then additionally comprise one or more of the following steps:
The modulated first and second carrier frequencies may be filtered S135 with a bandwidth adapted to a spectral occupancy of the narrow-band waveform filtering, by the second processor, in particular, the method further comprising pre-correlating S140, by the second processor, the first filtered first and second carrier frequencies. In some examples, this filtering S135 may be undertaken by a low-pass filter.

The modulated first carrier frequency may be multiplied S145, by the second processor, with a complex conjugate of the second modulated carrier frequency.

An output of the multiplication S145 may be correlated S150, by the second processor, with a known replica. As in a standard acquisition of the GNSS, as would be known by the skilled person, several (offset) code hypotheses may be proposed depending on the code/time uncertainty. For each delay, or equivalently, code hypothesis, the replica may be an offset version (delayed/advanced) of a sequence which is generated with respect to the local time of the receiver/second transceiver. For each delay hypothesis the appropriate conversion parameters are defined, as would be understood by the skilled person. In the case that no cyphering is applied on the $S_1$ and/or $S_2$ signals, the typical example of repetitive spreading sequences can be applied in GNSS: e.g. Gold code for GPS. This may mean that the signal $S_1$ may be modulated with a first repetitive code $a_k$ and the signal $S_2$ may be modulated with a second repetitive code $b_k$. $S_1$ and $S_2$ may fulfill the "$\Delta$fm" conditions described herein. The product of $a_k$ and $b_k$ may be another repetitive code $c_k$, which may then be used to generate the replica used to correlate the output of the complex multiplication to form the detector. In some examples, $a_k$ and $b_k$ may not be repetitive, but the product, $c_k$, may be repetitive. In some examples, $a_k$ and $b_k$ may not be repetitive, but the product, $c_k$, may not be repetitive, but known to support the generation of the replica. A second correlation comprising the steps following the first correlation may also be performed in a manner similar to that described above, with this second correlation relating to a course Doppler estimate, wherein the input for this coarse Doppler estimate is the output of the first correlation, with this output being correlated with an exponential including a tested Doppler hypothesis.

A first detector output comprising a magnitude of the correlation may be formed S155 by the second processor. The first detector output may be the absolute value or the squared absolute value of the correlation between the complex conjugate multiplication output S145 and the code $c_k$. In order to increase the SNR of the detector, it may be possible to further non-coherently combine several of the (elementary) first detector outputs, all generated with the same code hypothesis.

The first detector output may be compared S160 with a first detection threshold, by the second processor.

The coarse delay and Doppler estimates described above may be retained (S165) by the second processor.

The method of figure 1 may apply S110 a waveform based on a Frequency Hopping Code Division Multiple Access (FH-CDMA) scheme. More specifically, the method may transmit S120 two signals applying the FH-CDMA scheme, and may show a large frequency excursion of the hopped carrier frequencies, which in turn may provide good tracking performance once acquisition is achieved, and whose respective hopped carrier frequencies $f_1$ and $f_2$ may be selected with respect to specific constraints to facilitate acquisition. The constraint may be, for example, both $f_1$ and $f_2$ be modulated with a narrow band signal. Additionally or alternatively, if a middle baseband carrier frequency (the third carrier frequency described herein) is within a frequency band where ionospheric effects are negligible (C-band and above, for example) it may be possible to create a pool of distance $|f_1-f_2|$ and which is associated with a third hopped frequency $f_m$. As an example:

- $|f_1-f_2|$=1MHz for $f_m$ = 12MHz during first hop; and
- $|f_1-f_2|$=3MHz for $f_m$ = -4MHz during second hop; and
- $|f_1-f_2|$=2MHz for $f_m$ = +2MHz during third hop.

In particular, the two hopped carrier frequencies ($f_1$ and $f_2$) may each be modulated S115 with a narrow-band waveform such as, for example, BPSK, and may be symmetrical with respect to a middle baseband carrier frequency, $f_m$. This may mean that the $f_1$ and/or $f_2$ and/or $f_m$ is (implicitly) hopped with a cyphered scheme. Furthermore, the difference $|f_2-f_1|$ may be kept constant to $2\times\Delta f$. As both hopped carrier frequencies may be symmetrical with respect to a middle baseband carrier frequency, which is separate from $\Delta f$, this may enable the UT to undertake further steps of the method as disclosed herein.

The central baseband each of the hopped carrier frequencies, $f_1$ and fz, may be modulated S115 with a narrow-band waveform. This narrow-band waveform may be the same for both $f_1$ and fz, or different for $f_1$ and $f_2$. This modulation may be applied for each hop of $f_1$ and/or $f_2$ and/or $f_m$, or for a subset of the respective signals.

The output of the down/up converted signal may be filtered S135 with a bandwidth adapted to the spectral occupancy of the narrow-band waveform used in the previous modulation step S115 to reduce the noise contribution originating from multiplication in at least one of the following steps.

As an option, a pre-correlation S140 of the sample streams as output of the filtered signals may be applied before multiplication. In some examples, the bandwidth of the filter may be adapted in such a way that it fits the narrow-band to not lose a significant amount of power. As an example, if the narrowband waveform is a BPSK(1) with an occupancy of 2MHz with the main lobe comprising ~90% of the power, a filter of 2MHz or more may be used. In some examples, the down- and up-converting steps mentioned herein may be applied before the first filtering step.

The sample stream originating from the respectively filtered S135 and down-converted S130 carrier, $f_1$, and modulated S120 with a narrow-band waveform may be multiplied S145 with the complex conjugate of the sample stream originating from the respectively filtered S135 and up-converted carrier S130, fz, which were modulated S115 with the narrow-band waveform. In some examples, the sample stream originating from fz may be multiplied S145 with the complex conjugate of $f_1$. In some examples, both of these scenarios may happen.

The output of the multiplication S145 from both streams may be correlated S150 with a known replica applying a specific tested code hypothesis, and may form S155 a first detector output by taking the magnitude (or absolute value squared or magnitude squared or any other suitable output) of the correlation. In some examples, the tested delay (or code) hypothesis may also be applied to the middle baseband frequency, $f_m$, for the hop, and the offset frequency $\Delta f_m$. This may be due to the fact that for both FH-CDMA and OFDM-CDMA signals, both the code and frequency hopping schemes are rigidly tied. The first detector output may then be compared S160 with a first detection threshold replica, and the first detection threshold may be set according to specific probability of missed-detection and false alarm and may support the decision for the tested code hypothesis. The probability of detection and false alarm may impact the typical mean time to acquire. For example, if the first detection threshold is set too low (corresponding to, for example, a PFA of 10%) it may mean that the first detection threshold may be exceeded once every 10 times by a signal originating from noise, rather than the signals that are wished to be acquired. This may then impact/delay the acquisition time. If the first detection threshold is set too high, the probability to see the peak is reduced, as the peak has a lower likelihood of exceeding the threshold. Therefore, the first detection threshold may be set in order to balance these two effects.

However, any suitable first detection threshold may be used according to the present conditions and/or capabilities of the equipment being used.

The correlation function, which may be obtained by the above method, may be similar to the function of a CDMA signal modulated with a BPSK waveform, and showing a broader peak than the original FH-CDMA, or OFDM-CDMA, signal, or OFDM signals. This broader correlation peak may permit for a (large) reduction in the number of code hypotheses to be tested, when compared to a matched filtered acquisition, thereby leading to a more computationally efficient method. It is further shown through mathematical developments, as shown below, that the Doppler dependency vanishes in the multiplication step S145. This further reduces the overall number of hypotheses as it is possible to test separately the delay (i.e. code) hypotheses on one side, and the Doppler hypothesis on the other side yielding an overall number of hypotheses equal to the sum of the delay and Doppler hypotheses, while the overall number of delay and Doppler hypotheses in a conventional acquisition scheme is the multiplication of the delay and Doppler hypotheses. This lessens the computational and hardware requirements needed to undertake the method. Furthermore, as both hopped carrier frequencies $f_1$ and $f_2$ are separated by a constant interval $2\times\Delta f$ over the complete correlation duration in some examples, this may enable the suppression of the ionospheric contribution in the detector output, further lessening the computational and hardware requirements needed to undertake the method.

Figure 2 shows a flow chart of a method of creating and processing a signal waveform according to an embodiment as described herein.

The method of figure 2 relates to a so-called "Spectral Folded Acquisition with Pre-Conversion to Baseband" concept. This concept is based on the use of two Direct Sequence CDMA Frequency-Hopped (DS/FH) interplexed signals, $S_1$ and $S_2$, transmitted symmetrically, about a middle frequency, by a sequence of frequency carriers by the first transceiver.

At reception by the second transceiver, and the down-converted and up-converted first and second signals, wherein the first and second signals are converted from their respective RF carrier frequencies $f_o$ to the central baseband carrier frequency, the two signals $S_1$ and $S_2$ can be expressed as Equation 1 and Equation 2. Here neither multipath, nor noise, are considered.

Equation 1:

$$S_1(t-\tau) = A_1 e^{j\varphi_1} \sum_{m=1}^{M} \propto_m d_1(t-\tau) e^{j2\pi(\Delta f_m + f_m + f_{d_m})(t-\tau-\tau_{Iono}(f_0+f_m+\Delta f_m))} p(t-\tau) \otimes \sum_{k=\frac{(m-1)N_c}{M}+1}^{\frac{mN_c}{M}} a_k \delta(t-kT_c)$$

Equation 2:

$$S_2(t-\tau) = A_2 e^{j\varphi_2} \sum_{m=1}^{M} \propto_m d_2(t-\tau) e^{j2\pi(-\Delta f_m + f_m + f_{d_m})(t-\tau-\tau_{Iono}(f_0+f_m-\Delta f_m))} p(t-\tau) \otimes \sum_{k=\frac{(m-1)N_c}{M}+1}^{\frac{mN_c}{M}} b_k \delta(t-kT_c)$$

where:

M: number of hops during an integration time;
$N_c$: number of cyphered chips during the integration time;
$T_c$: chip period;
$f_m$: middle baseband carrier frequency for the hop m;
$\Delta f_m$: offset frequency relative to the middle baseband frequency carrier $f_m$, wherein the absolute value of the offset $\Delta f_m$ depends of the middle baseband carrier frequency $f_m$ and/or on the hop index m, where $\Delta f_m = g(m)$, and where g is a function relating the offset $\Delta f_m$ to the hop index m;
$\tau$: delay between a satellite and a receiver;
p: chip pulse shape;

$f_{dm}$: doppler of the respective signal at frequency $f_m + \Delta f_m$;
$\varphi_1$: initial phase offset of the first signal at transmission;
$\varphi_2$: initial phase offset of the second signal at transmission;
$A_1$: amplitude of the first signal;
$A_2$: amplitude of the second signal;
$d_1$: data of the first signal;
$d_2$: data of the second signal;
$a_k$: kth chip of the first signal;
$b_k$: kth chip of the second signal;
$\alpha_m$: 1 or 0 to define potential discontinuity; and
$\tau_{Iono}(f)$: contribution of the ionospheric effect at carrier f, and is given by the corresponding expression:

$$\tau_{Iono}(f)[S] = -\frac{40.3 \times TEC}{c_0 \times f^2}$$

Here TEC represents the total electron count in units of TECU (1 TECU =1E16 e/m$^2$) and varies between few 10s of TECU during calm ionospheric periods to 1000 TECU for active ionospheric periods, and $c_0$ represents the speed of light ($c_0$=3e8m/s).

By replacing $\tau_{Iono}(f)$ [$S$] in the carrier f with $f_0+f_m\pm\Delta f_m$. where $f_0$ represents the central carrier frequency (e.g. 1575.42MHz for the GPS L1 or Galileo E1 signals), the following approximation is yielded:

$$\tau_{Iono}(f_0 + f_m \pm \Delta f_m)[S] \approx -\frac{40{,}3 \times TEC}{c_0 \times (f_0 + f_m \pm \Delta f_m)^2} = \approx -\frac{40{,}3 \times TEC}{c_0 \times f_0^2}(1 - 2\frac{f_m \pm \Delta f_m}{f_0})$$

The skilled person understands that any suitable central carrier frequency may be used.

At reception by the second transceiver, the typical signal conditioning steps, known to the skilled person, may take place within the applied analogue and digital front-end. This may comprise at least one of:

- Analogue filtering
- Amplification with the Automatic Gain Control
- Down-conversion from Radio Frequency (RF) carrier, down to Intermediate Frequency (IF) carrier or based band.
- Analogue to digital conversion (ADC)
- Digital Filtering

The above steps are common and generic for most GNSS receivers. Some variants regarding application of the filtering in the analogue or digital domain, or the down-conversion scheme can also be stated but have no impact on the present disclosure, as will be understood by the skilled person. The skilled person is aware of such modifications and may undertake such modifications as they see fit. The skilled person also understands that for a typical receiver, the filtered bandwidth (either in the analogue or digital domain) is usually equal to the transmitted bandwidth to exploit the transmitted FH-CDMA signals.

At least one of the following steps may also be undertaken by the method described herein.

The converted signal is further frequency converted S210 by splitting said signal into 2 branches through a down-conversion (with $f_m+\Delta f_m$) and an up-conversion (with $f_m-\Delta f_m$) based on the knowledge of the middle baseband carrier frequency $f_m$ for the hop, and the offset frequency $\Delta f_m$. This yields two signals, $S_N$ and $S_P$:

Equation 3:

$$S_N(t-\tau) = A_1 e^{j\varphi_1} \sum_{m=1}^{M} \alpha_m d_1(t-\tau) e^{j2\pi(f_{d_m})\left(t-\tau+\frac{40.3\times TEC}{C_0 f_0^2}(1-2\frac{f_m+\Delta f_m}{f_0})\right)} p(t-\tau) \otimes \sum_{k=\frac{(m-1)N_c}{M}+1}^{\frac{mN_c}{M}} a_k\,\delta(t-kT_c)$$

Equation 4:

$$S_P(t-\tau) = A_2 e^{j\varphi_2} \sum_{m=1}^{M} \alpha_m d_2(t-\tau) e^{j2\pi(f_{d_m})\left(t-\tau+\frac{40.3\times TEC}{C_0 f_0^2}(1-2\frac{f_m-\Delta f_m}{f_0})\right)} p(t-\tau) \otimes \sum_{k=\frac{(m-1)N_c}{M}+1}^{\frac{mN_c}{M}} b_k\,\delta(t-kT_c)$$

At this stage, the resulting signals may occupy a spectral bandwidth directly proportional to the chip rate.

A (digital) filtering S220 of the down- and respective up-converted signal may then be applied with a bandwidth accounting for the chip rate. Considering, for example, a BPSK(1) as a signal waveform p(t), then a typical filtering bandwidth would be 2.046MHz, when considering the main lobe of the corresponding spectral occupancy of the BPKS(1). The skilled person understands that other waveforms and bandwidths may be used.

The next step may consist of multiplying S230 the output of the first branch, $S_N$, with the conjugate of the output of the second branch, $S_P$, as shown in Equation 5 and Equation 7. Equation 6 supports mathematical developments related to the argument of the product signal with focus on the ionospheric term.

Equation 5 (Complex Conjugate of $S_P$)

$$S_P^*(t-\tau) = A_2 e^{-j\varphi_2} \sum_{m=1}^{M} \alpha_m d_2(t-\tau) e^{-j2\pi(f_{d_m})\left(t-\tau+\frac{40.3\times TEC}{C_0 f_0^2}\left(1-2\frac{f_m-\Delta f_m}{f_0}\right)\right)} p^*(t-\tau) \otimes \sum_{k=\frac{(m-1)N_c}{M}+1}^{\frac{mN_c}{M}} b_k\,\delta(t-kT_c)$$

Equation 6 (Argument of the exponential comprising the Ionospheric term):

$$\begin{aligned} & j2\pi(f_{d_m})\left(t-\tau+\frac{40.3\times TEC}{C_0 f_0^2}(1-2\frac{f_m+\Delta f_m}{f_0})\right) - j2\pi(f_{d_m})\left(t-\tau+\frac{40.3\times TEC}{C_0 f_0^2}\left(1-2\frac{f_m-\Delta f_m}{f_0}\right)\right) \\ & = j2\pi(f_{d_m})(t-\tau) + j2\pi(f_{d_m})\left(\frac{40.3\times TEC}{C_0 f_0^2}\right) - j2\pi(f_{d_m})\left(\frac{40.3\times TEC}{C_0 f_0^2}\right)\left(2\frac{f_m}{f_0}\right) - j2\pi(f_{d_m})\left(\frac{40.3\times TEC}{C_0 f_0^2}\right)\left(2\frac{\Delta f_m}{f_0}\right) - \\ & j2\pi(f_{d_m})(t-\tau) - j2\pi(f_{d_m})\left(\frac{40.3\times TEC}{C_0 f_0^2}\right) - j2\pi(f_{d_m})\left(\frac{40.3\times TEC}{C_0 f_0^2}\right)\left(-2\frac{f_m}{f_0}\right) - j2\pi(f_{d_m})\left(\frac{40.3\times TEC}{C_0 f_0^2}\right)\left(2\frac{\Delta f_m}{f_0}\right) = \\ & -j2\pi(f_{d_m})\left(\frac{40.3\times TEC}{C_0 f_0^2}\right)\left(4\frac{\Delta f_m}{f_0}\right) \end{aligned}$$

In a next step, the output of the multiplication may be correlated S240 with a replica generated, r(t), for a given tested code delay hypothesis, $\hat{\tau}$, as expressed in Equation 8.

Equation 8:

$$r(t) = p^2(t) \otimes \sum_{k=0}^{N_c} a_k b_k \delta(t - kT_c - \hat{\tau})$$

In a final step, the magnitude of the correlation output may be calculated S250 (alternatively a squared magnitude could also be applied or any other suitable output), leading to a Cross-Ambiguity Function, CAF, defined by Equation 9, and where the argument $\Delta\tau = \tau - \hat{\tau}$ is the coarse code hypothesis error.

Equation 9:

$$|CAF(\Delta\tau)| \approx |CCF_{p^2}(\Delta\tau)|$$

The CAF may serve as validation for the proposed tested hypothesis, and the comparison of the detector output with a first detection threshold set according to specific probability of missed-detection and false alarm may support the decision for the tested code hypothesis.

It results from Equation 7 and Equation 9 that through the following process:

- The Doppler dependency disappears; and
- The ionospheric dependency disappears as the term $e^{-j2\pi(f_{d_m})\left(\frac{40.3\times TEC}{c_0 f_0^2}\right)\left(4\frac{\Delta f_m}{f_0}\right)}$ can be factorized over all frequency hops since the offset frequency, $\Delta f_m$, relative to the middle baseband frequency carrier $f_m$ has the same amplitude over the hops, and therefore vanishes in the application of absolute value operator for the CAF calculation.

It results from Equation 9 that the "Spectral Folded Acquisition with Pre-Conversion to Baseband" concept can test the delay hypothesis separately from the Doppler hypothesis, which vanishes thanks to the $S_N(t - \tau) \times S_P(t - \tau)^*$ multiplication. The "*" sign here signifies the conjugate of the function. The only constraint is that the two hopping sequences are symmetric to a known frequency carrier sequence, $f_m$, which is the case since $\Delta f_m$ takes either $+\Delta f$ or $-\Delta f$.

Furthermore, both PRN codes $a_k$ and $b_k$ may be random and set by the user of the method, but with the constraint that the product spreading code $c_k = a_k \times b_k$ may be periodic, or known to the user in order to allow for the replica signal described herein to be generated.

Figure 3 shows a flow chart of a method of creating and processing a signal waveform according to an embodiment as described herein.

The flow chart of figure 3 relates to a "Spectral Folded Acquisition with Pre-Conversion to Baseband and Pre-Correlation" concept.

A possible limitation of the "Spectral Folded Acquisition with Pre-Conversion to Baseband" concept mentioned above is the introduction of an inflated noise caused by the signal multiplication $S_N(t - \tau) \times S_P(t - \tau)^*$. In order to reduce the corresponding noise contribution of the detector output, it is proposed to reduce the noise bandwidth before the aforementioned multiplication. For this purpose, a pre-correlation S320 with very short code, $Sc_n$ and $Sd_n$, is applied before the signal multiplication.

At reception by the second transceiver, and the down-converted and up-converted first and second signals, wherein the first and second signals are converted from their respective RF carrier frequencies $f_o$ to the baseband, the two signals $S_1$ and $S_2$ applying respective short codes can be expressed by Equation 10 and Equation 11.

Equation 10:

$$S_1(t-\tau) = A_1 e^{j\varphi_1} \sum_{k=1}^{N_c} a_k \sum_{m=\frac{(k-1)M}{N_c}}^{\frac{kM}{N_c}} d_1(t-\tau) e^{j2\pi(\Delta f_m + f_m + f_{d_m})(t-\tau)} p(t-\tau) \otimes \sum_{n=\frac{(m-1)N_S}{M}+1}^{\frac{mN_S}{M}} Sc_n\, \delta(t - nT_c)$$

Equation 11:

$$S_2(t-\tau) = A_2 e^{j\varphi_2} \sum_{k=1}^{N_c} b_k \sum_{m=\frac{(k-1)M}{N_c}}^{\frac{kM}{N_c}} d_2(t-\tau) e^{j2\pi(-\Delta f_m + f_m + f_{d_m})(t-\tau)} p(t-\tau) \otimes \sum_{n=\frac{(m-1)N_S}{M}+1}^{\frac{mN_S}{M}} Sd_n\, \delta(t-nT_c)$$

With:

- $Sc_n$: nth chip of short code signal 1
- $Sd_n$: nth chip of short code signal 2

In the above equations, the contribution of the ionosphere delay is not shown for simplicity of representation. However, the same mathematical developments could show the corresponding Ionospheric delay vanishing from the detector output as shown above for the "Spectral Folded Acquisition with Pre-Conversion to Baseband" concept.

The same initial processing steps as for "Spectral Folded Acquisition with Pre-Conversion to Baseband" scheme apply, to this present concept, with:

- At reception, the typical signal conditioning steps, as mentioned above in relation to figure 2, take place within the analogue and digital front-end.
- further converting S310 the received first and second signals by splitting the received first and second signals into 2 branches through an down conversion (with $f_m + \Delta f_m$) and a up conversion (with $f_m - \Delta f_m$) based on the knowledge of the middle-based frequency carrier $f_m$ for the hop, and the offset frequency $\Delta f_m$.
- The (digital) filtering S330 of the down- and up-converted signal being achieved with a width accounting for the chip rate.

A difference with respect to the above-described "Spectral Folded Acquisition with Pre-Conversion to Baseband" concept is a pre-correlation S320 of each signal with the very short code ($Sc_n$ and $Sd_n$). For this pre-correlation, a code search and Doppler search are applied, but are limited in terms of time processing with a low number of code delay and Doppler hypotheses due to the short code, and the short Doppler range over the short code duration. It is effectively shown that the Doppler Mis-alignment losses expressed in [dB] are equal to 20*log10(sinc($T_{coh} \times \Delta_{Dopp}$)) where $T_{coh}$ is the coherent integration time in the pre-correlation process, and equal to the short code duration, $\Delta_{Dopp}$ is the distance between consecutive Doppler hypotheses, also called Doppler bin width. For example, to limit the Doppler mis-alignment losses to 0.91dB, $\Delta_{Dopp} = (1/2) \times 1/T_{coh}$, and to limit the Doppler mis-alignment losses to 3.92dB $\Delta_{Dopp} = (1/4) \times 1/T_{coh}$. The former expression shows that that short code duration authorizes a wider Doppler bin width. As an example, for a short code of 341 chips (resp. 31 chips) and a chip rate of 1MCps, $T_{coh} \approx 0.3$ms (resp. $T_{coh} \approx 30\mu$s) and $\Delta_{Dopp} = 1.5$KHz ($\Delta_{Dopp} = 15$KHz) for a maximal Doppler mis-alignment loss to 3.92dB. For GNSS signals, where the typical span is 6KHz, it is shown that 4 (resp.1) Doppler hypotheses are necessary, which is one or more order of magnitudes smaller than the number of Doppler hypotheses to be tested in more conventional GNSS receivers. The output of the pre-correlated (Equation 14 and Equation 17) branches are again called $S_n$ and $S_p$. The next step after the (digital) filtering S330 consists of multiplying S340 the output of the branches, $S_n$, with the conjugate of the output of the second branch $S_p$ as shown in Equation 18. Here neither multipath, nor noise leading to a CAF limited to the CCF defined by Equation 19 are considered for sake of simplification. Similar to the flow chart of figure 2, in a final step the magnitude of the correlation output may be calculated S350. Equation 12 below corresponds to the down-converted $S_1$ signal, and Equation 13 corresponds to the replica comprising the short code, but also to the Doppler hypothesis $f_{d'}$ applied during the pre-correlation process, considering, as stated above, that the number of Doppler hypotheses $f_{d'}$ is relatively small, and is correlated in Equation 14. Similarly, Equation 15 below corresponds to the up-converted $S_2$ signal, and Equation 16 corresponds to the replica comprising the short code but also to the Doppler hypothesis $f_{d'}$, and is correlated in Equation 17

Equation 12:

$$S_{down,1}(t-\tau) = A_1 e^{j\varphi_1} d_1(t) e^{j2\pi f_d t} p(t) \otimes \sum_{k=1}^{N_c} Sc_k a_k\, \delta(t - kT_c - \tau)$$

$$S_{down,1}(t-\tau) = A_1 e^{j\varphi_1} \sum_{k=1}^{N_c} a_k d_1(t) e^{j2\pi f_d t} p(t) \otimes \sum_{n=\frac{(k-1)N_S}{N_c}+1}^{\frac{kN_S}{N_c}} Sc_n\, \delta(t - nT_c - \tau)$$

Equation 13:

$$S_{preCorr,1}(t-\tau') = e^{j2\pi f_{d'} t} p(t) \otimes \sum_{n=1}^{N_S} Sc_n\, \delta(t - nT_c - \tau')$$

Equation 14:

$$S_N(t-\Delta\tau) = S_{down,1}(t-\tau) \otimes S_{preCorr,1}(t-\tau')^* = A_1 e^{j\varphi_1} d_1(t) e^{j2\pi\Delta f_d t} CCF_p(t) \otimes \sum_{k=1}^{N_c} a_k\, \delta(t - kN_s T_c - \Delta\tau)$$

Equation 15:

$$S_{up,2}(t-\tau) = A_2 e^{j\varphi_2} \sum_{k=1}^{N_c} b_k d_2(t) e^{j2\pi f_d t} p(t) \otimes \sum_{n=\frac{(k-1)N_S}{N_c}+1}^{\frac{kN_S}{N_c}} Sd_n\, \delta(t - nT_c - \tau)$$

Equation 16:

$$S_{preCorr,2}(t-\tau') = e^{j2\pi f_{d'} t} p(t) \otimes \sum_{n=1}^{N_S} Sd_n\, \delta(t - nT_c - \tau')$$

Equation 17:

$$S_P(t-\Delta\tau) = S_{up,2}(t-\tau) \otimes S_{preCorr,2}(t-\tau')^* = A_2 e^{j\varphi_2} d_1(t) e^{j2\pi\Delta f_d t} CCF_p(t) \otimes \sum_{k=1}^{N_c} b_k\, \delta(t - kN_s T_c - \Delta\tau)$$

Equation 18:

$$S_N(t-\Delta\tau) S_P(t-\Delta\tau)^* = A_1 A_2 d_1(t) d_2(t) e^{(j(\varphi_1-\varphi_2))} CCF_p{}^2(t) \otimes \sum_{k=0}^{N_c} a_k b_k \delta(t - kN_s T_c - \Delta\tau)$$

Equation 19:

$$|CAF(\Delta\tau)| \approx \left| CCF_{CCF_p{}^2}(\Delta\tau) \right|$$

When applying a pre-correlation, then the correlation step applied to the output of the multiplication between the output of the two branches, one being complex conjugate, and defined by Equation 18, may be carried out with a replica generated with the product of the secondary codes, $a_k b_k$ described herein.

Figure 4 shows a flow chart of a method of creating and processing a signal waveform according to an embodiment as described herein.

Contrarily to FH-CDMA signals, which transmit only a subset of carriers modulated with the pulse shape, p(t), OFDM signals exploit and transmit all carriers, called sub-carriers in a 5G context. Nevertheless, to ensure satisfactory acquisition and tracking of the OFDM signals some specific subcarriers are not modulated with "random" data, but rather with a known data pattern. Such sub-carriers modulated with known sequences are called Pilot subcarriers. The above features may consist of selecting S410 such pilot sub-carriers, ignoring S420 the sub-carriers modulated with data, while still satisfying the symmetry between the pair of sub-carriers, $f_1$ and fz, with respect to a middle baseband subcarrier, $f_m$. By doing so, and ignoring the sub-carriers dedicated to the communication, it may be possible to apply the above-mentioned feature to the concepts mentioned in relation to at least figures 2 and 3.

Figure 5 shows a diagram of discontinuous transmission of two signals according to an embodiment as described herein. Figure 6 shows a spectrogram of Frequency Hopping-Code Division Multiple Access with discontinuous transmission according to an embodiment as described herein.

Figure 5 illustrates the two signals $S_1$ and $S_2$, as described above, being transmitted from a single satellite. At each epoch $t_i$, each signal is modulated by one or more chips (either overlaid with a data symbol or representing a pure pilot). The two signals, illustrated with a white circle and a black circle, are symmetric versus a known hopping frequency carrier sequence $f_m$ (illustrated with a vertical line,) also called a middle baseband carrier frequency. The two signals $S_1$ and $S_2$ can be continuous or discontinuous, meaning that in the discontinuous case, no signal is transmitted for some epochs. For clarity, the pulse shape, p(t), of the signals and the corresponding spectral occupancy are not represented in the figures, but only the occurrences of the dedicated signals in the time-frequency domain. The two signals $S_1$ and $S_2$ can be continuously or discontinuously transmitted with a random "sleep cycle" time sequence as shown in Figures 5 and 6.

Figure 7 shows a flow chart of Spectral Folded Acquisition with Pre-Conversion to Baseband according to an embodiment as described herein.

As can be seen in figure 7, $S_1$ and $S_2$, as described herein, are received by a transceiver which, in this example, comprises an antenna. The signals are then processed by the RF and digital front-end before being split into two branches, wherein one branch comprises an IF down-conversion and the other an IF up-conversion. The respective signals are then digitally filtered, as described herein, and two signals, $S_N$ and $S_P$ are output. The corresponding digital filter is a Low-Pass (LP) filter. One of the signal $S_N(t)$ or $S_P(t)$ is then passed to a complex conjugate operation performed by the processor. The decision for the application of the complex conjugate operation to either the $S_N(t)$ or $S_P(t)$ signal is arbitrary and does not impact the main objective of the proposed scheme described herein. In figure 7, it is applied to the up-conversion branch, yielding $S^*_P(t)$, although it is to be understood that it can be applied to the down-conversion branch. The signals $S_N$ and $S^*_P(t)$ are then multiplied, yielding $[S_N \times S^*_P(t)]$. The product signals, $S_N$ and $S^*_P(t)$, are then filtered once again via adapted digital filtering, yielding $[S_N(t) \times S^*_P(t)]_{Filter}$. The role of the corresponding adapted digital filter is to suppress potential interfering signals which are also comprised in the received signals. It is noted that the adapted filter may be omitted in some variants of architectures for the second processor without significantly impacting the main objective of the proposed scheme described herein. The product, and possibly filtered, signal, $[S_N(t) \times S^*_P(t)]_{Filter}$, is then input into a conventional correlation block and which comprises a code and waveform generator, a shift register, a complex multiplication and an integrate and dump operation. The role of the code generator is to produce a code replica, called r(t), comprising chip values according to the spreading sequence. In the case of uncyphered spreading sequences, the code is usually periodic and can, for example, be a Gold Code for the GPS signals, or a randomly optimized code for the E1-B and E1-C signals. In the case the spreading sequence is cyphered, then an additional cyphering algorithm is comprised in the corresponding code generator block. This code generator also comprises a waveform generator in order to modulate the generated stream of chips with the appropriate BPSK waveform, BOC waveform, or any other suitable type of waveform, such as an OFDM waveform, which is then applied in a matched filter. The code generator receives information regarding the delay hypothesis to be applied for the code tested hypothesis. This yields a shift of the corresponding code replica which is correlated to the signal $[S_N(t) \times S^*_P(t)]_{Filter}$. It is outlined herein that the tested delay hypothesis in the acquisition process will not only impact the production of the shifted code replica, but also impact the selection of the middle baseband frequency $f_m$ and also the offset $\Delta f(m)$, as the hop frequency and the chip values applied in the code replica are rigidly related in FH-CDMA schemes. This is also true for OFDM signals, where the sub-carrier plays the role of the hop frequency. Finally, the product of the code replica and the signal $[S_N(t) \times S^*_P(t)]_{Filter}$ is fed to an Integrate and Dump block to finally compute the correlation function for the tested delay hypothesis. The magnitude of the corresponding correlation function is then compared to a threshold set according to specified PFA and PD levels. Alternatively, the squared magnitude of the correlation function can also be taken for later comparison and is acquisition architecture dependent. If the magnitude of the correlation function does not exceed the corresponding threshold, then another code delay hypothesis is tested, yielding on one side another setting of the middle baseband frequency $f_m$, and also of the offset $\Delta f(m)$, and on the other side, another shift of the generated code replica. This process is repeated until the magnitude of the correlation function exceeds the first detection threshold. In that case, it is considered that the receiver coarsely knows the delay hypothesis, called $\tau_{test,coarse}$. Then, the corresponding code delay value is kept and/or stored to produce a replica which is used for the next step of the signal acquisition, namely the coarse estimation of the Doppler. On the right part of Figure 7, the additional blocks corresponding to the coarse Doppler estimation are represented. T First the signals $S_N(t)$ and $S_P(t)$ are produced by applying the correct estimation of the delay, $\tau_{test,coarse}$, which enables the middle baseband frequency $f_m$ to be set accordingly, and also the offset $\Delta f(m)$. Contrarily to the coarse code estimation, no complex conjugate operation is applied to the signal $S_P(t)$. Indeed, it is shown that the complex conjugate operation yields the wipe-off of the Doppler information, which is now used for coarse Doppler estimation. Therefore, both signals $S_N(t)$ and $S_P(t)$ are multiplied directly, and eventually filtered, with an adapted filter, $[S_N(t)\times S_P(t)]_{Filter}$. Then, the code replica generated with correct and coarse code hypothesis, $\tau_{test,coarse}$, is then correlated to the $[S_N(t)\times S_P(t)]_{Filter}$ signal. The output of the correlation calculated for the correct and coarse code hypothesis is multiplied with an exponential whose argument is set according to a specific Doppler hypothesis, $f_{d,test}$, and is also shifted with the correct and coarse acquisition hypothesis $e^{-4\pi j f_{d,test}(t-\tau_{test,coarse})}$. The reason for the factor 4 in the aforementioned expression of the argument of the exponential term is that the output of the $[S_N(t)\times S_P(t)]_{Filter}$ signal depends on the Doppler with a factor twice larger than for conventional Doppler acquisition techniques. Again, the magnitude of the multiplication output is calculated and compared to a second detection threshold set according to the PFA and PD. If the magnitude of the product does not exceed the second threshold, then another Doppler hypothesis is tested. Else, the Doppler hypothesis is considered as the correct coarse hypothesis to be retained for later phases of the signal processing, such as the pull-in and the tracking.

In the above description, a single correlation has been applied to compute the magnitude compared with the detection threshold. In order to improve detection and acquisition performance, it is possible to extend the Signal to Noise Ratio (SNR) of the detector input by non-coherently combining different correlations. The combination of coherent and non-coherent integrations to produce acquisition detector input over a so-called dwell-time is a typical technique used to improve acquisition performance. Furthermore, other methods applying Fast Fourier Transform, FFT, can also be applied in order to produce the correlation output in a more efficient way. The FFT algorithm, which may be stored in the herein mentioned memory and executed by the respective processor with the replica signal, then also acts as an input for the correlation step mentioned herein. The skilled person understands that an FFT is a typical known method to calculate the correlation in, for example, GNSS. An inverse FFT is then performed in order to produce the correlation function, defined as $(\mathrm{IFFT}(\mathrm{FFT}([S_N(t-\tau)\times S_P^*(t-\tau)])\ \mathrm{x}\ \mathrm{conj}(\mathrm{r}(t-\tau_{test}))$ and, in this example, a square of the magnitude is calculated, although it could be a non-squared magnitude, or any other suitable calculation.

In the present specification, the first part of the method, i.e. the down/up conversion, filtering, pre-correlation (optional), complex conjugate multiplication, correlation, and detector output, may enable for the delay (i.e. code) to be tested "separately" from the Doppler, as the Doppler term is suppressed. Once the delay (i.e. code) is acquired it is then possible to concentrate on the Doppler hypothesis. To conclude, in place of testing both code and Doppler simultaneously, yielding to $N_{Delay}\times N_{Doppler}$ tests, where $N_{Delay}$ corresponds to the number of Delay hypotheses, and where $N_{Doppler}$ corresponds to the number of Doppler hypotheses, the code search may be completed first, and then the Doppler search is completed. The leads to only $N_{Delay}$ + $N_{Doppler}$ hypotheses being tested and so, a large reduction in the complexity.

Figure 8 shows a CCF of Spectral Folded Acquisition with Pre-Conversion to Baseband signal according to an embodiment as described herein.

In relation to the above, the CAF would be limited to the one-dimension CCF of the square of the pulse shape, $p^2$, illustrated in Figure 8, as the Doppler dependency vanishes. The peak of the CCF is quite broad, as seen in figure 8, with respect to the peak of a CCF corresponding to a wide-band FH-CDMA signal which would be obtained with a matched filter approach (i.e. the replica has the same pulse shape as the incoming FH-CDMA). Therefore, this yields a lower number of correlators to be applied in the time (code/delay) domain, resulting in a lower complexity in both hardware and software.

Figure 9 shows a CAF of a Spectral Folded Acquisition with Pre-Conversion to Baseband signal according to an embodiment as described herein.

To demonstrate the validity of the concept, two signals are transmitted with a Doppler of 1 KHz, the CAF presented in Figure 9 shows the search Doppler is 0 while Doppler is usually, in this example, 1 KHz in reality, although other frequencies may be used. It is a major advantage to have a long integration time despite the fast change of the Doppler of the LEO satellites.

Figure 10 shows a flow chart of Spectral Folded Acquisition with Pre-Conversion to Baseband and Pre-Correlation according to an embodiment as described herein.

As can be seen in figure 10, $S_1$ and $S_2$, as described herein, are received by a transceiver which, in this example, comprises an antenna. The graph in the upper left of the figure shows Power Spectral Density of the received signal, with frequency on the x-axis and Power Spectrum dBW/Hz on the y-axis. It can be seen that the graph is most symmetrical about a middle baseband frequency, i.e. the middle baseband carrier frequency, $f_m$.

The signals are then processed by the RF and digital front-end before being split into two branches, wherein one branch comprises an IF down-conversion and the other an IF up-conversion. The respective signals are then digitally filtered and pre-correlated via respective short codes, as described herein. The graphs below the pre-correlation signifier are CAF graphs, similar to the graph seen in figure 9.

Two signals, $S_N$ and $S_P$, are output after the pre-correlation. The signals are then combined and filtered once again via adapted digital filtering, with the graphs showing time on the x-axis and amplitude on the y-axis for each signal, and then a combined graph. The combined signal is then input into a conventional correlation block whose objective is to correlated the output of the multiplied and possibly filtered signals $S_N$ and $S^*_P$, with a replica signal generated for the delay hypothesis to be tested. The magnitude, or alternatively the squared magnitude, of the output of the correlation is applied, and a comparison with a threshold is performed to validate, or not validate, the tested delay hypothesis. The graph shown on the right of this portion is a CCF graph, similar to the one seen in figure 8. Similar to the above, this method reduces the overall number of tested hypotheses to $N_{Delay} + N_{Doppler}$ and so, a large reduction in the complexity. Furthermore, this method enables the noise bandwidth to be reduced before the multiplication operation, thanks to the pre-correlation with short codes.

Figure 11 shows a flow chart of Spectral Folded Acquisition with Pre-Conversion to Baseband according to an embodiment as described herein. Here, it can be seen that many of the blocks of the flow chart correspond to the blocks described above. However, in figure 11, the step of filtering (with a bandpass filter) precedes the conversion step.

Figure 12 shows a block diagram of a tracking architecture of the receiver according to an embodiment as described herein. This is applied to the second processor, and aims at tracking the received signals generated by the first processor, in order to estimate precisely the code delay, the carrier phase and frequency which are used later as observables for positioning. This architecture applies so-called scalar tracking loops, where each received and tracked signal corresponds to a dedicated Digital Receiver Channel.

The following main blocks on Figure 12 are described in more details:

- On the left part, the common building block of a typical receiver is shown, which comprises a receiver antenna and a receiver analogue and digital front-end. This building block has the same functionalities and is shared to the one applied for the acquisition of the received signal generated by the first processor.

- Then, on this figure three repetitions of the pair of Down and Up-conversion branches, followed by a Low Pass (LP) digital Filtering are shown, these branches can be distinguished from each other with the selection of the middle baseband frequency $f_m$ and also of the offset $\Delta f(m)$ whose values depend on one side on the precise delay estimated by the Delay tracking loops and on the other side on the Early, Late or Prompt correlator channels necessary to generate the code delay, the carrier phase and the carrier frequency discriminators presented hereafter. To support the selection of the appropriate middle baseband frequency $f_m$ and also of the offset $\Delta f(m)$ values as function of the aforementioned delays, Look-Up-Tables (LUT) are used. For the prompt correlator channel, the values for the middle baseband frequency $f_{m,P}$ and the offset $\Delta f(m,P)$ are the ones corresponding to the estimate of the code delay $\tau(t)$ estimated at epoch t, since the middle baseband frequency $f_m$ and the offset $\Delta f(m)$ on one side, and the chip values of the prompt replica on the other side are rigidly bound in the FH-CDMA scheme. For the Early (resp. Late) correlator channel, the values for the middle baseband frequency $f_{m,E}$ (resp. $f_{m,L}$) and the offset, $\Delta f(m,E)$ (resp. $\Delta f(m,L)$) are the values corresponding to the estimate of the code delay $\tau(t)$ estimated at epoch t and advanced (resp. delayed) of half the so-called Early-Late Spacing (ELS). Here, the rigid relation between the middle baseband frequency $f_{m,E}$ (resp. $f_{m,L}$) and the offset $\Delta f(m,E)$ (resp. $\Delta f(m,L)$) on one side, and the chip values of the Early (resp. Late) replica needs again to be considered. For both pairs of down and up-conversion branches, corresponding to the Early and Late correlator channels, an additional operation of complex conjugate is applied here on the down-conversion branch (but can also be applied on the up-Conversion branch). This complex conjugate operation is not applied on the pair of up and down-conversion branches corresponding to the Prompt correlator channel as explained here after. Then for all three pairs of branches, the output of the down- and up- conversion branches (containing also the digital filter and eventually the complex conjugate operations according to the above) are multiplied between each other, and the output of the multiplication is fed to an adapted filter. The roles of the LP filter and adapted filters are identical to the ones applied in the architecture for the acquisition implemented in the second processor of the received signal generated by the first processor. In particular, the adapted digital filter can also be omitted (i.e. no filtering, "all pass" filter) without impacting substantially the main objectives of the proposed scheme described herein. Furthermore, a similar architecture would be obtained by proceeding first to a BandPass Digital Filtering and then an down- and up-conversion, as explained for the architecture for the acquisition of the received signal.

- Distinction is now made with respect to the role and processing of the output of the adapted digital filter corresponding to the Early and Late correlator channels and which will serve for the tracking of the code delay, and the role and processing of the output of the adapted digital filter corresponding to the prompt correlator channel and which will serve for the tracking of the carrier phase and frequency. In the following $S_E(t)$ (resp. $S_L(t)$) is defined as the output of the adapted filter corresponding to the Early (resp. Late) correlator channels, while $S_P(t)$ is defined as the output of the adapted filter corresponding to the Prompt correlator channel. All signals $S_E(t)$, $S_P(t)$ and $S_L(t)$ serve as input to the Digital Tracking Channels of the Early, Prompt and Late correlator channels.

- Concentrating of the Digital Tracking Channel corresponding to the prompt correlator channel. In a first step the digital signals, $S_P(t)$ are multiplied on one side by a sine function whose argument is the remaining carrier plus the estimation of the carrier phase, and on the other side by a cosine function whose argument is again the remaining carrier plus the estimation of the carrier phase. The carrier phase estimate is materialized thanks to a Carrier NCO which is fed with a control signal originating from the Phase Lock Loop filter implemented in the Receiver Processor. The signal at the output of the sine function is usually called the I-Component of the tracked channel (for In-Phase) while the signal at the output of the cosine function is usually the called the Q-Component of the tracked channel (for Quadrature Phase).

- Regarding the Digital Tracking Channel corresponding to the Early and Later correlator channels, the multiplication with the sine and cosine functions with arguments produced by the carrier NCO is not necessary, as it is shown that the signals $S_E(t)$ and $S_L(t)$ no longer depend on the carrier phase (and neither on the Doppler). Nevertheless, since they are still complex signals, then the real part (resp. imaginary part) of the corresponding $S_E(t)$ and $S_L(t)$ signals respectively called the I-Component and the Q-Components as for the Digital Tracking Channel for the Prompt correlator channel are extracted for later DLL processing.

- Then each of the I- and Q-components are multiplied by different shifted versions of the prompt replica which represents the best estimate of the received signal. On the proposed figure, three main replicas are built per the I or Q component: the early, the prompt and the late replica (it must be noted that other receiver implementations consider 5 or even more shifted replicas). The output of the multiplication is then integrated and dumped to provide the correlator outputs necessary for the DLL and PLL, processed in the Receiver Processor block. The Digital Receiver Processor implements the DLL discriminators and a digital filter to produce a command to the code NCO. This means that altogether, 6 correlator channels are fed to the receiver processor: The Early-In Phase $E_I$, the Prompt-In Phase $P_I$, the Late-In Phase $L_I$, the Early-Quadrature Phase $E_Q$, the Prompt-Quadrature Phase and the Late- Quadrature Phase $L_Q$. To build the required replicas, a code generator aims at generating code sequences which are later shifted according to the Early, Prompt and Late offsets, built into the 3-bit shift register block. This code generator also comprises a waveform generator in order to modulate the replica signal with the appropriate BPSK or BOC waveform or any other waveforms, such as an OFDM waveform, and is then applied in a matched filter. The Code generator is disciplined by an NCO which receives control signal from the DLL running in the Receiver Processor (in the same manner than the Carrier NCO received control signal from the PLL running in the Receiver Processor).

In the former description, it is also possible to implement a FLL, and especially an FLL discriminator, in place of a PLL in the receiver processor, if only information for the frequency is needed but not the phase.

It is noted that the application of the proposed embodiment for tracking received signals is not only limited to scalar tracking architectures but can also be extended to Vector Tracking architectures (not disclosed herein). This alternative type of architecture applies a Kalman Filter fed by the Early, Late and Prompt Components for each of the N received signals, and produces an estimate of the user position and velocity which can be translated into an estimate of the code and phase delay for each of the N received signals. Those estimates then serve controlling the code and carrier NCOs shown on Figure 12.

The following equations justify the proposed processing steps applied for the digital tracking channel corresponding to the prompt correlator channel. The expression the argument product of $S_N(t\text{-}\tau)$ and $S_P(t\text{-}\tau)$ is:

Equation 1 (demodulation):

$$S_N(t-\tau)S_P(t-\tau) = A_1A_2d_1(t)d_2(t)e^{(j(\varphi_1-\varphi_2))}e^{j4\pi(f_{d_m})\left(t-\tau+\frac{40.3\times TEC}{C_0f_0^2}(1-2\frac{f_m}{f_0})\right)}p^2(t)\otimes\sum_{k=0}^{N_c}a_kb_k\delta(t-kT_c-\tau)$$

To demodulate the data, either the data applied on $S_1$ (resp. $S_2$) must be known so that the Data on Sz (resp. $S_1$) can be retrieved from the phase derived from the signal $s_N(t-\tau)s_P(t-\tau)$, or one of the signals $S_1$ or $S_2$ must be Data free (Pilot Signal).

The argument of the exponential term in the term $S_N(t-\tau)S_P(t-\tau)$ can be derived as follows:

$$=j2\pi(f_{d_m})\left(t-\tau+\frac{40.3\times TEC}{C_0f_0^2}(1-2\frac{f_m+\Delta f_m}{f_0})\right)+j2\pi(f_{d_m})\left(t-\tau+\frac{40.3\times TEC}{C_0f_0^2}\left(1-2\frac{f_m-\Delta f_m}{f_0}\right)\right)$$

$$=j2\pi(f_{d_m})(t-\tau)+j2\pi(f_{d_m})\left(\frac{40.3\times TEC}{C_0f_0^2}\right)-j2\pi(f_{d_m})\left(\frac{40.3\times TEC}{C_0f_0^2}\right)\left(2\frac{f_m}{f_0}\right)-j2\pi(f_{d_m})\left(\frac{40.3\times TEC}{C_0f_0^2}\right)\left(2\frac{\Delta f_m}{f_0}\right)$$
$$+j2\pi(f_{d_m})(t-\tau)+j2\pi(f_{d_m})\left(\frac{40.3\times TEC}{C_0f_0^2}\right)-j2\pi(f_{d_m})\left(\frac{40.3\times TEC}{C_0f_0^2}\right)\left(2\frac{f_m}{f_0}\right)+j2\pi(f_{d_m})\left(\frac{40.3\times TEC}{C_0f_0^2}\right)\left(2\frac{\Delta f_m}{f_0}\right)$$
$$=j2\pi(f_{d_m})(t-\tau)+j2\pi(f_{d_m})\left(\frac{40.3\times TEC}{C_0f_0^2}\right)+j2\pi(f_{d_m})\left(\frac{40.3\times TEC}{C_0f_0^2}\right)\left(2\frac{\Delta f_m}{f_0}\right)+j2\pi(f_{d_m})(t-\tau)+j2\pi(f_{d_m})\left(\frac{40.3\times TEC}{C_0f_0^2}\right)$$
$$+j2\pi(f_{d_m})\left(\frac{40.3\times TEC}{C_0f_0^2}\right)\left(-2\frac{f_m}{f_0}\right)$$
$$=j4\pi(f_{d_m})\left(t-\tau+\frac{40.3\times TEC}{C_0f_0^2}(1-2\frac{f_m}{f_0})\right)$$

It can be verified that through the multiplication (without complex conjugate operation) the term $S_N(t-\tau)s_P(t-\tau)$

- is now Doppler dependent (contrarily to $S_N(t-\tau)s_P(t-\tau)^*$)
- depends on the ionosphere through the term ( $\frac{40.3\times TEC}{C_0f_0^2}(1-2\frac{f_m}{f_0})$ )

Therefore, it is possible to use the product $S_N(t-\tau)S_P(t-\tau)$, eventually filtered in order to feed the PLL or FLL discriminator, as in a conventional receiver architecture in order to track the signal carrier phase and/or frequency.

The phase due to ionosphere effects, and present in the term ( $\frac{40.3\times TEC}{C_0f_0^2}(1-2\frac{f_m}{f_0})$ ) may be evaluated for each $f_m$ thanks to the knowledge of the TEC through external models, such as the Nequick G and Klobuchar Ionospheric models applied respectively for the Galileo and GPS systems, or additional internal processing. The knowledge of the phase delay due to the ionosphere then enables for the reduction of the ionospheric dependency for further processing of the $S_N(t-\tau)S_P(t-\tau)$ term in the FLL and PLL.

Figure 13 shows a block diagram of a system for of creating and processing a signal waveform according to an embodiment as described herein.

Here, it can be seen that there is a transmission device 1000 comprising a processor 1002, a memory 1004 and a transceiver 1006. There is also a reception device 1100 comprising a processor 1102, a memory 1104 and a transceiver 1106. The skilled person understands that any suitable transmission protocol may be used to transfer information and/or data and/or signals between the two devices 1000, 1100 via the transceivers 1006, 1106. The respective memories 1004, 1104 may store instructions which, when executed by the respective processors, 1002, 1102, cause the steps of the method described herein to be undertaken. In some examples, the transceiver 1006 of the transmission device 1000 may be a transmitter and/or the transceiver 1106 of the reception device 1100 may be a receiver.

No doubt many other effective alternatives will occur to the skilled person. It will be understood that the invention is not limited to the described embodiments and encompasses modifications apparent to those skilled in the art and lying within the scope of the claims appended hereto.

## Claims

**1.** A method for creating and processing a signal waveform, the method comprising:

generating (S110), by a first processor, two hopped carrier frequencies, wherein the two hopped carrier frequencies are symmetrical with respect to a third carrier frequency, $f_m$, and wherein a distance between the first and second hopped carrier frequencies, |second hopped carrier frequency - first hopped carrier frequency|, is pre-defined;

modulating (S115), by the first processor, the first hopped carrier frequency and the second hopped carrier frequency with a narrow-band waveform, wherein a first signal is a first outcome of the modulation (S115) on the first hopped carrier frequency and a second signal is a second outcome of the modulation (S115) on the second hopped carrier frequency, converting the modulated first and second hopped carrier frequencies to the central carrier frequency $f_0$;

transmitting (S120), by a first transceiver coupled to the first processor, the modulated first signal and the modulated second signal;

receiving (S125), by a second transceiver, the transmitted first and second signals, wherein the second transceiver is couplable to a second processor configured to process the received first and second signals; and converting (S130), by the second processor, a first baseband of the modulated first carrier frequency to a central baseband carrier frequency, and a second baseband of the modulated second carrier frequency to the central baseband carrier frequency, wherein the conversion to the central baseband carrier frequency is configured to be applied for each hop applied to the modulated first and second carrier frequencies.

**2.** The method of claim 1, wherein the converting (S130) further comprises:

down-converting, by the second processor, the first baseband frequency of the received first signal of the modulated first carrier frequency to the central baseband frequency; and
up-converting, by the second processor, the second baseband frequency of the received second signal of the modulated second carrier frequency to the central baseband frequency,
wherein the down-conversion and the up-conversion are applied for each hop of the transmitted first and second signals.

**3.** The method as claimed in claim 1, after receiving (S125) the first and second signals, further comprising: first filtering (S135), by the second processor, the modulated first and second carrier frequencies with a bandwidth adapted to a spectral occupancy of the narrow-band waveform, in particular, the method further comprising pre-correlating (S140), by the second processor, the first filtered first and second carrier frequencies.

**4.** The method of any one of the preceding claims, after receiving (S125) the first and second signals, further comprising: multiplying (S145), by the second processor, the modulated first carrier frequency with a complex conjugate of the modulated second carrier frequency.

**5.** The method of any one of the preceding claims, after receiving (S125) the first and second signals, further comprising: pre-correlating (S320), by the second processor, the first and second signals with respective short codes, wherein the first signal to be pre-correlated is defined by:

$$S_1(t-\tau) = A_1 e^{j\varphi_1} \sum_{k=1}^{N_c} a_k \sum_{m=\frac{(k-1)M}{N_c}}^{\frac{kM}{N_c}} d_1(t-\tau) e^{j2\pi(\Delta f_m + f_m + f_{d_m})(t-\tau)} p(t-\tau) \otimes \sum_{n=\frac{(m-1)N_S}{M}+1}^{\frac{mN_S}{M}} Sc_n\, \delta(t-nT_c)$$

and the second signal to be pre-correlated is defined by:

$$S_2(t-\tau) = A_2 e^{j\varphi_2} \sum_{k=1}^{N_c} b_k \sum_{m=\frac{(k-1)M}{N_c}}^{\frac{kM}{N_c}} d_2(t-\tau) e^{j2\pi(-\Delta f_m + f_m + f_{d_m})(t-\tau)} p(t-\tau) \otimes \sum_{n=\frac{(m-1)N_S}{M}+1}^{\frac{mN_S}{M}} Sd_n\, \delta(t-nT_c)$$

where:

M: number of hops during an integration time;
$N_c$: number of cyphered chips during the integration time;
$T_c$: chip period;
$f_m$: middle baseband carrier frequency for the hop m;
$\Delta f_m$: offset frequency relative to the middle baseband frequency carrier $f_m$, wherein the absolute value of the offset $\Delta f_m$ depends of the middle baseband carrier frequency $f_m$ and/or on the hop index m, where $\Delta f_m = g(m)$, and where g is a function relating the offset $\Delta f_m$ to the hop index m;
$\tau$: delay between a satellite and a receiver;
p: chip pulse shape;
$f_{dm}$: doppler of the respective signal at frequency $f_m + \Delta f_m$;
$\varphi_1$: initial phase offset of the first signal at transmission;
$\varphi_2$: initial phase offset of the second signal at transmission;
$A_1$: amplitude of the first signal;

Az: amplitude of the second signal;
$d_1$: data of the first signal;
$d_2$: data of the second signal;
$a_k$: kth chip of the first signal;
$b_k$: kth chip of the second signal;
$\alpha_m$: 1 or 0 to define potential discontinuity;
$N_s$: a length of the short codes;
$S_{cn}$: $n^{th}$ chip of the short code for the first signal; and
$S_{dn}$: $n^{th}$ chip of the short code for the second signal.

**6.** The method of any one of the preceding claims, further comprising:

forming at least two correlations, by the second processor, by correlating the output of the multiplication (S145) with at least two replicas generated for a delay hypothesis derived from an estimated delay hypothesis, wherein the at least two correlations are delayed or advanced to produce different Early and Late correlator channels for the generation of a Delay Lock Loop Discriminator; and
multiplying the modulated first carrier frequency with the modulated second carrier frequency without application of a complex conjugate operation; and
forming a further correlation, by the second processor, by correlating the output of the multiplication of the modulated first carrier frequency with the modulated second carrier frequency without application of a complex conjugate operation, with a further corresponding replica generated for a delay hypothesis derived from the from the estimated delay hypothesis to produce a Prompt correlator channel for the generation of a Phase Lock Loop Discriminator and/or a Frequency Lock Loop Discriminator, wherein the further correlation and the further replica are different from the at least two correlations and the at least two replicas; and
estimating, by the second processor, a code delay, a phase and a frequency of the received first and second signals based on the generated Delay Lock Loop Discriminator, Phase Lock Loop Discriminator and/or Frequency Locked Loop Discriminator.

**7.** The method of any one of claims 1 to 5, further comprising:

forming a first correlation (S150), by the second processor, by correlating the output of the multiplication (S145) with a known replica generated for a tested delay hypothesis;
forming (S155), by the second processor, a first detector output comprising a magnitude of the first correlation;
comparing (S160), by the second processor, the first detector output to a first detection threshold;
retaining (S165), by the second processor, a coarse delay estimate if:

a) the first detector output exceeds the first detection threshold; or
b) repeating the formation of the first correlation (S150), the formation of the first detector output (S155) and the comparison of the first detector output (S160) for another tested delay hypothesis if the first detector output does not exceed the first detection threshold;

multiplying, by the second processor, the modulated first carrier frequency with the modulated second carrier frequency without application of a complex conjugate operation and the formation of the first correlation (S150) by applying the retained coarse delay estimate;
forming a second correlation, by the second processor, by correlating the output of the first correlation (S150) with an exponential including a tested Doppler hypothesis;
forming, by the second processor, a second detector output comprising a magnitude of the second correlation;
comparing, by the second processor, the second detector output to a second detection threshold; and
retaining (S165), by the second processor, a coarse Doppler estimate if:

c) the second detector output exceeds the second detection threshold; or
d) repeating the formation of the second correlation, the formation of the second detector output and the comparison of the second detector output for another tested Doppler hypothesis if the second detector output does not exceed the second detection threshold.

**8.** The method of any one of the preceding claims, wherein an FH-CDMA scheme is adapted with an application of a cyphering scheme to a hopped frequency domain and a spreading code domain of said FH-CDMA scheme.

**9.** The method of any one of the preceding claims, when dependent on claim 2, wherein the first signal to be down-converted is defined by the equation:

$$S_1(t-\tau) = A_1 e^{j\varphi_1} \sum_{m=1}^{M} \propto_m d_1(t-\tau) e^{j2\pi(\Delta f_m + f_m + f_{d_m})(t-\tau-\tau_{Iono}(f_0+f_m+\Delta f_m))} p(t-\tau) \otimes \sum_{k=\frac{(m-1)N_c}{M}+1}^{\frac{mN_c}{M}} a_k \delta(t-kT_c)$$

and the second signal to be up-converted is defined by the equation:

$$S_2(t-\tau) = A_2 e^{j\varphi_2} \sum_{m=1}^{M} \propto_m d_2(t-\tau) e^{j2\pi(-\Delta f_m + f_m + f_{d_m})(t-\tau-\tau_{Iono}(f_0+f_m-\Delta f_m))} p(t-\tau) \otimes \sum_{k=\frac{(m-1)N_c}{M}+1}^{\frac{mN_c}{M}} b_k \delta(t-kT_c)$$

where:

M: number of hops during an integration time;
$N_c$: number of cyphered chips during the integration time;
$T_c$: chip period;
$f_m$: middle baseband carrier frequency for the hop m;
$\Delta f_m$: offset frequency relative to the middle baseband frequency carrier $f_m$, wherein the absolute value of the offset $\Delta f_m$ depends of the middle baseband carrier frequency $f_m$ and/or on the hop index m, where $\Delta f_m = g(m)$, and where g is a function relating the offset $\Delta f_m$ to the hop index m;
$\tau$: delay between a satellite and a receiver;
p: chip pulse shape;
$f_{dm}$: doppler of the respective signal at frequency $f_m + \Delta f_m$;
$\varphi_1$: initial phase offset of the first signal at transmission;
$\varphi_2$: initial phase offset of the second signal at transmission;
$A_1$: amplitude of the first signal;
Az: amplitude of the second signal;
$d_1$: data of the first signal;
$d_2$: data of the second signal;
$a_k$: kth chip of the first signal;
$b_k$: kth chip of the second signal;
$\alpha_m$: 1 or 0 to define potential discontinuity; and
$\tau_{Iono}(f)$: contribution of the Ionospheric effect at carrier f, and is given by the corresponding expression:

$$\tau_{Iono}(f)[S] = -\frac{40.3 \times TEC}{c_0 \times f^2}$$

where:

TEC: total electron count; and
$c_0$: speed of light.

**10.** The method of any one of the preceding claims, wherein

the first signal and/or the second signal is transmitted (S120) in a continuous or discontinuous manner, in particular wherein the first and second signals are transmitted (S120) with a random sleep cycle time sequence.

**11.** The method of claim 9 or 10, after receiving (S125) the first and second signals, further comprising:

frequency converting (S210), by the second processor, the first and second signals via down-converting the first signal and up-converting the second signal to the central baseband frequency, based on the middle baseband carrier frequency and the offset frequency;
second filtering (S220), by the second processor, the frequency converted signals by applying a bandwidth accounting for a chip rate of the frequency converted signals;
multiplying (S230), by the second processor, the second filtered first signal with a complex conjugate of the second filtered second signal;
correlating (S240), by the second processor, the output of the multiplication with a replica generated by the second processor via the use of a tested code delay hypothesis; and
calculating (S250), by the second processor, a magnitude of the output of the correlation.

**12.** The method of any one of claims 6 to 11, wherein the correlation step (S240) comprises the equation:

$$r(t) = p^2(t) \otimes \sum_{k=0}^{N_c} a_k b_k \delta(t - kT_c - \hat{\tau})$$

where:

r(t): generated replica; and
$\hat{\tau}$: code delay hypothesis; and

the calculation step (S250) comprises the equation:

$$|CAF(\Delta\tau)| \approx |CCF_{p^2}(\Delta\tau)|$$

where:

CAF: Cross-Ambiguity Function, wherein the CAF is a validation for the proposed tested hypothesis, and wherein the CAF is configured to be set according to a specific probability of missed detection and/or false alarm; and
CCF: Cross Correlation Function.

**13.** The method of claim any one of claims 2 to 5 or 7 to 11, wherein the multiplying step (S340) comprises the equation:

$$S_N(t - \Delta\tau) S_P(t - \Delta\tau)^* = A_1 A_2 d_1(t) d_2(t) e^{(j(\varphi_1 - \varphi_2))} CCF_p{}^2(t) \otimes \sum_{k=0}^{N_c} a_k b_k \delta(t - kN_s T_c - \Delta\tau)$$

where:

$S_N$: the fourth filtered first signal;
$S_P$: the fourth filtered second signal; and
CCF: Cross Correlation Function; and
the calculation step (S350) comprises the equation:

$$|CAF(\Delta\tau)| \approx \left|CCF_{CCF_p{}^2}(\Delta\tau)\right|$$

where:
CAF: Cross-Ambiguity Function

**14.** The method of any one of the preceding claims, wherein a subset of the first and/or second carrier frequencies are modulated (S115) with a known data pattern, the method further comprising:

selecting (S410), by the first processor, the subset of first and/or second carrier frequencies;
ignoring (S420), by the second transceiver, the subset of first and/or second carrier frequencies,
wherein the entirety of the first and second carrier frequencies are symmetrical with respect to the third carrier frequency.

**15.** A system comprising:

a first transceiver (1006) and a second transceiver (1106);
a first memory (1004) couplable to the first transceiver (1006) and a second memory (1104) couplable to the second transceiver (1106); and
a first processor (1002) couplable to the first memory (1004) and first transceiver (1006), and a second processor (1102) couplable to the second memory (1104) and second transceiver (1106),
wherein the first and second processors (1002, 1102) are configured to undertake the method steps of any one of claims 1 to 14.

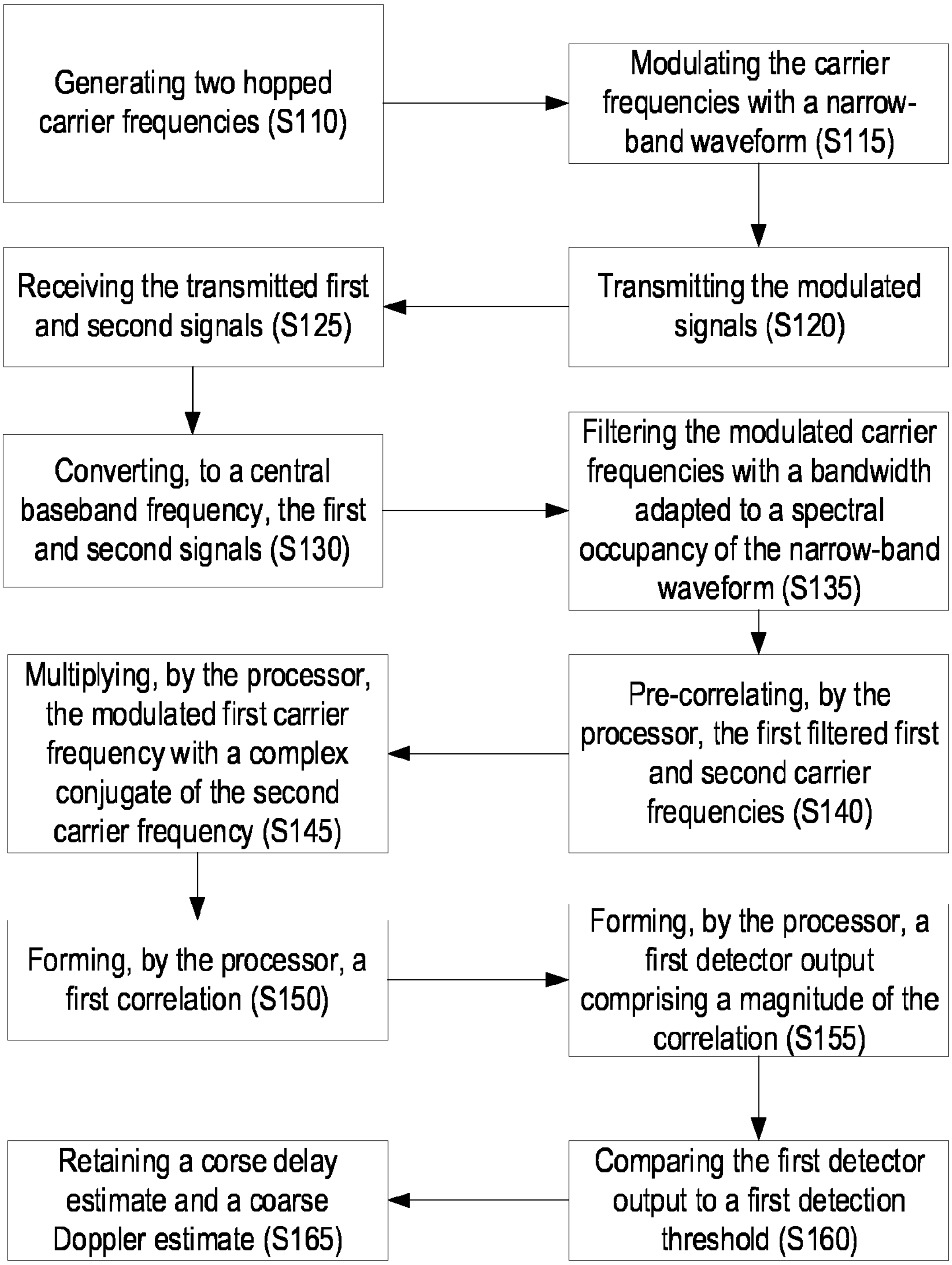
Generating two hopped carrier frequencies (S110)
Modulating the carrier frequencies with a narrow-band waveform (S115)
Transmitting the modulated signals (S120)
Receiving the transmitted first and second signals (S125)
Converting, to a central baseband frequency, the first and second signals (S130)
Filtering the modulated carrier frequencies with a bandwidth adapted to a spectral occupancy of the narrow-band waveform (S135)
Pre-correlating, by the processor, the first filtered first and second carrier frequencies (S140)
Multiplying, by the processor, the modulated first carrier frequency with a complex conjugate of the second carrier frequency (S145)
Forming, by the processor, a first correlation (S150)
Forming, by the processor, a first detector output comprising a magnitude of the correlation (S155)
Comparing the first detector output to a first detection threshold (S160)
Retaining a corse delay estimate and a coarse Doppler estimate (S165)

Figure 1

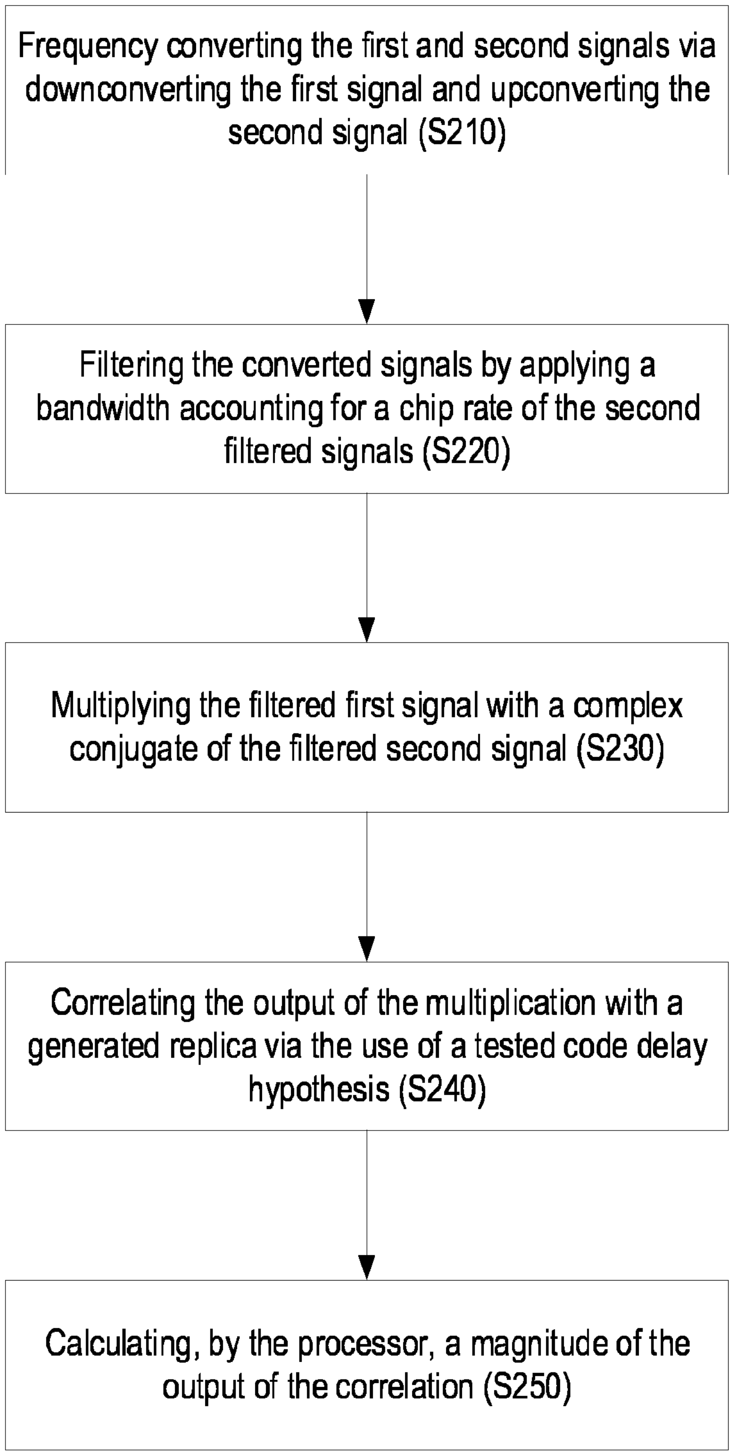
Frequency converting the first and second signals via downconverting the first signal and upconverting the second signal (S210)
Filtering the converted signals by applying a bandwidth accounting for a chip rate of the second filtered signals (S220)
Multiplying the filtered first signal with a complex conjugate of the filtered second signal (S230)
Correlating the output of the multiplication with a generated replica via the use of a tested code delay hypothesis (S240)
Calculating, by the processor, a magnitude of the output of the correlation (S250)

Figure 2

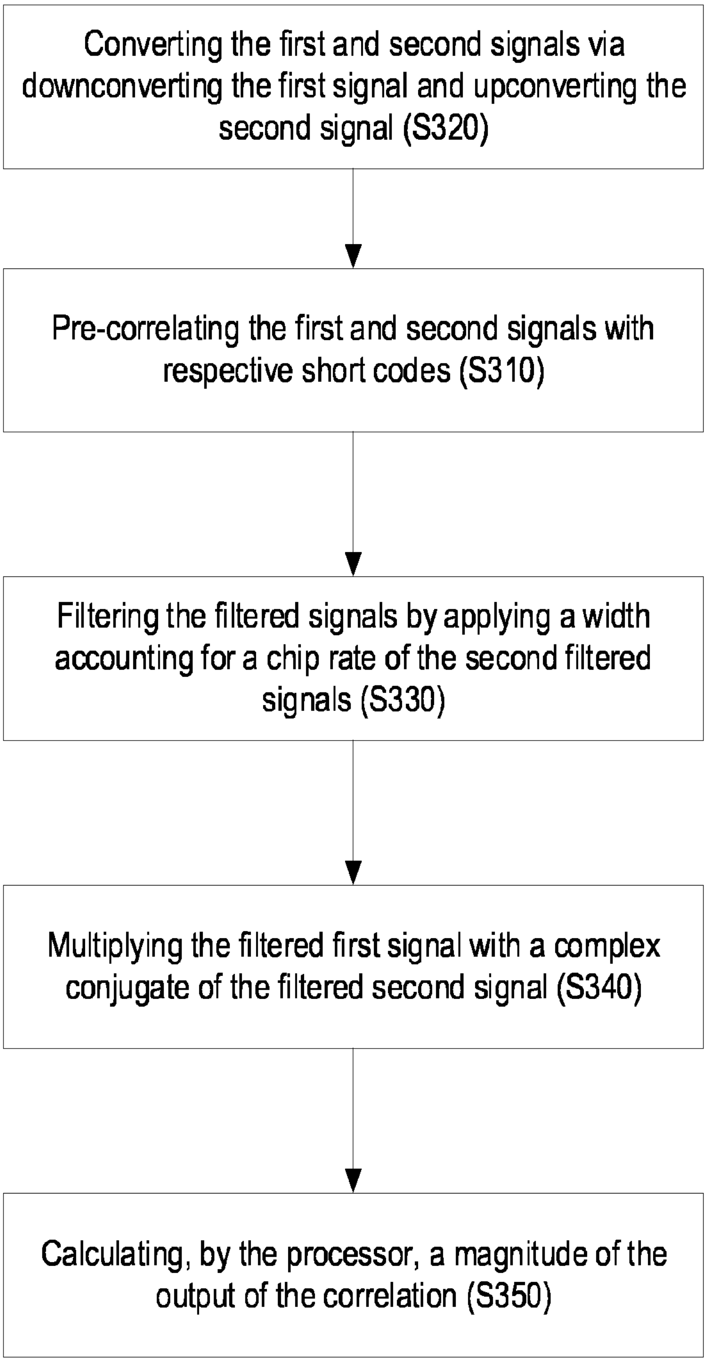
Converting the first and second signals via downconverting the first signal and upconverting the second signal (S320)
Pre-correlating the first and second signals with respective short codes (S310)
Filtering the filtered signals by applying a width accounting for a chip rate of the second filtered signals (S330)
Multiplying the filtered first signal with a complex conjugate of the filtered second signal (S340)
Calculating, by the processor, a magnitude of the output of the correlation (S350)

Figure 3

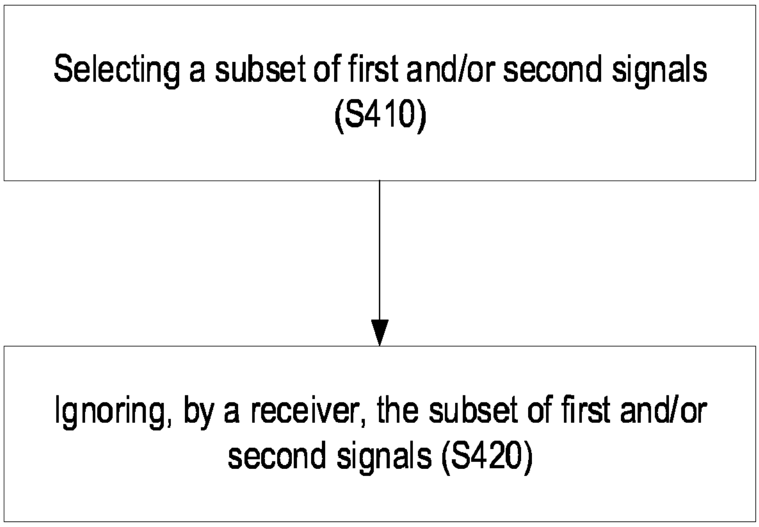
Selecting a subset of first and/or second signals (S410)
Ignoring, by a receiver, the subset of first and/or second signals (S420)

Figure 4

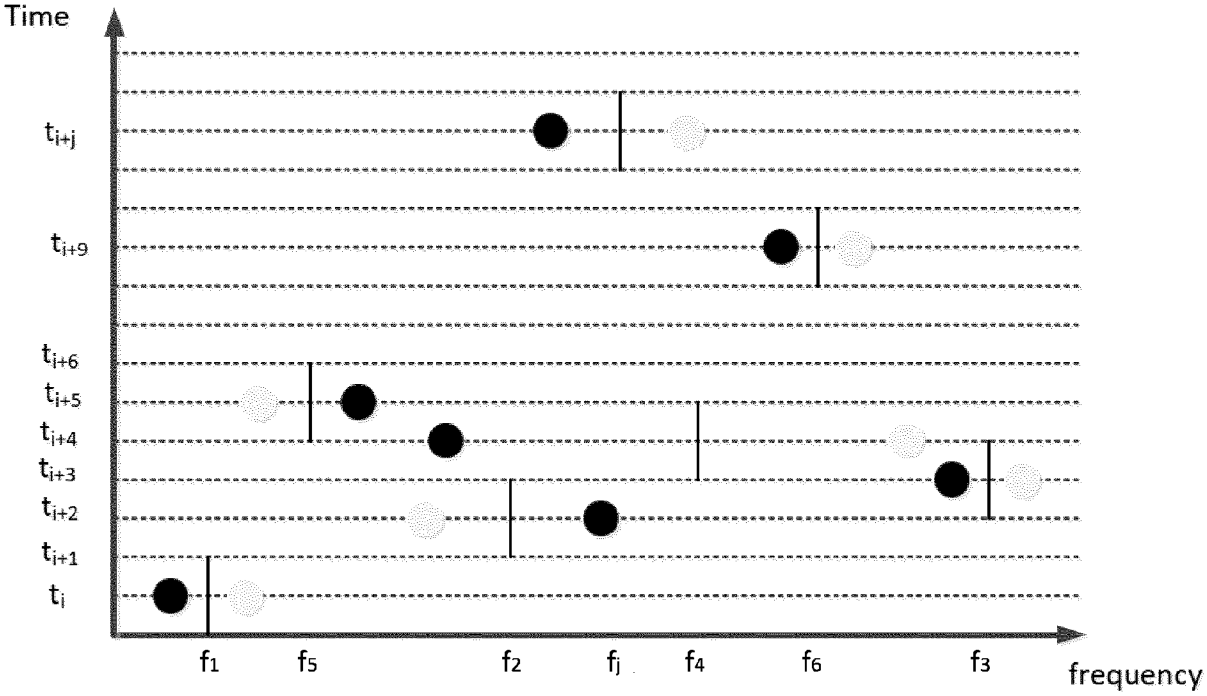


Figure 5

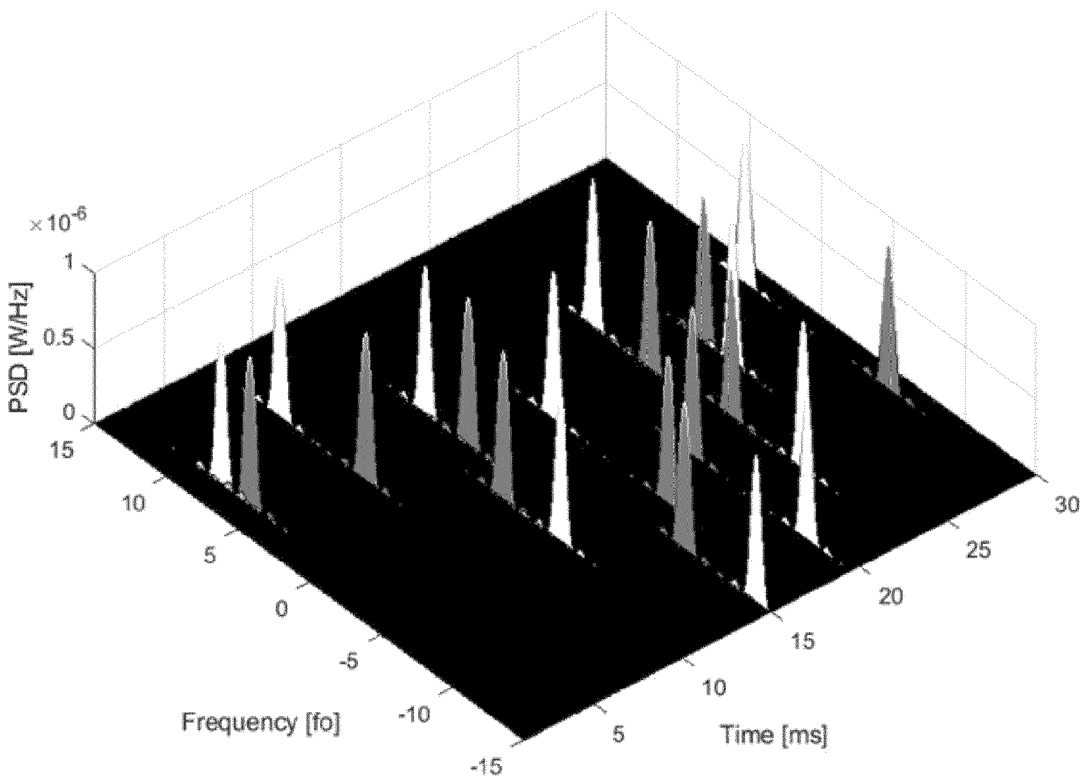


Figure 6

Figure 7

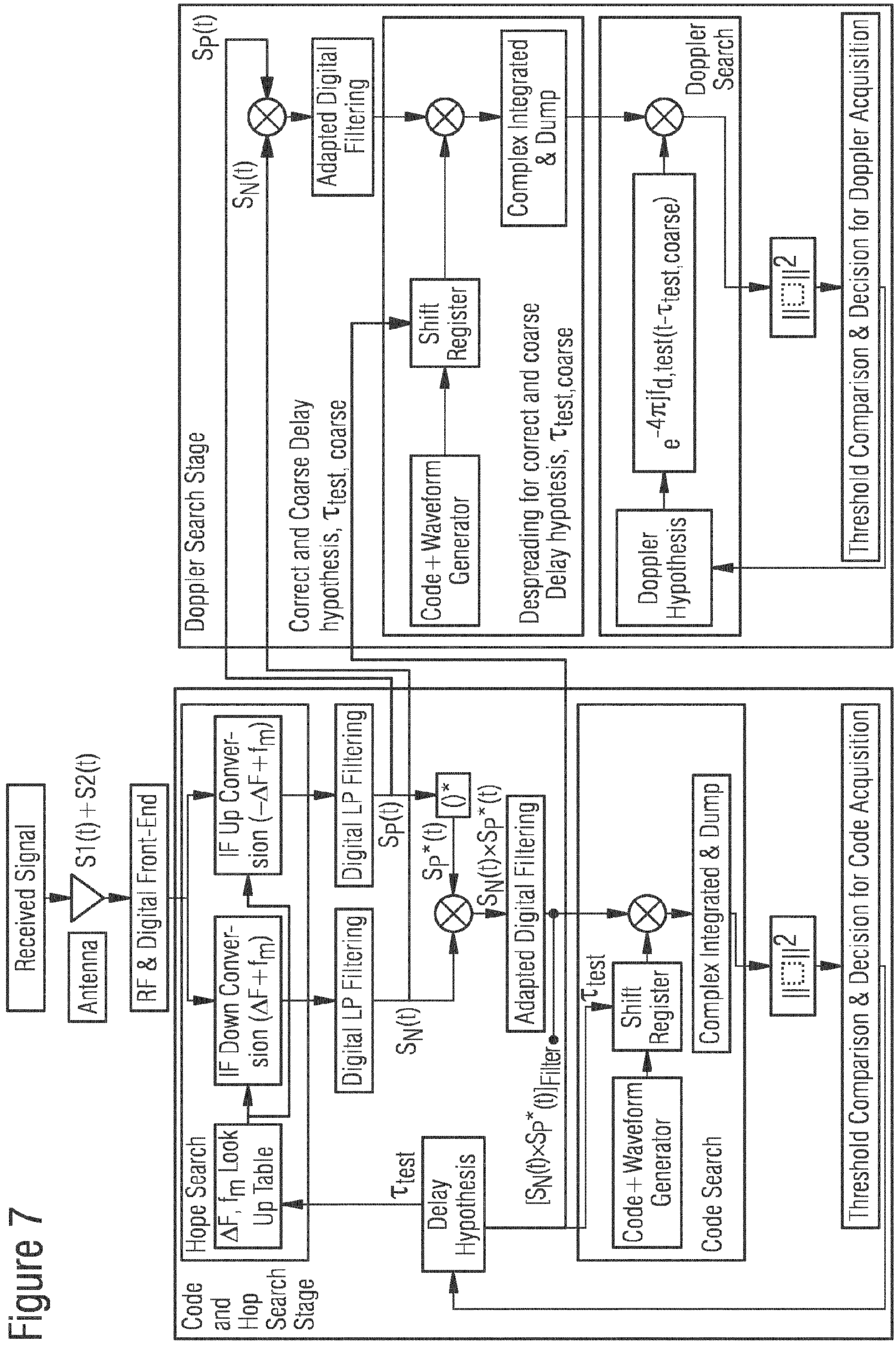
Received Signal
Antenna
S1(t) + S2(t)
RF & Digital Front-End
Code and Hop Search Stage
Hope Search
ΔF, fm Look Up Table
IF Down Conversion (ΔF + fm)
IF Up Conversion (−ΔF + fm)
Digital LP Filtering
Digital LP Filtering
SN(t)
SP(t)
SP*(t)
()*
SN(t)×SP*(t)
Adapted Digital Filtering
τtest
Delay Hypothesis
[SN(t)×SP*(t)]Filter
τtest
Code + Waveform Generator
Shift Register
Complex Integrated & Dump
Code Search
||[ ]||2
Threshold Comparison & Decision for Code Acquisition
Doppler Search Stage
SP(t)
SN(t)
Adapted Digital Filtering
Correct and Coarse Delay hypothesis, τtest, coarse
Code + Waveform Generator
Shift Register
Complex Integrated & Dump
Despreading for correct and coarse Delay hypotesis, τtest,coarse
Doppler Hypothesis
e−4πjfd,test(t−τtest,coarse)
Doppler Search
||[ ]||2
Threshold Comparison & Decision for Doppler Acquisition

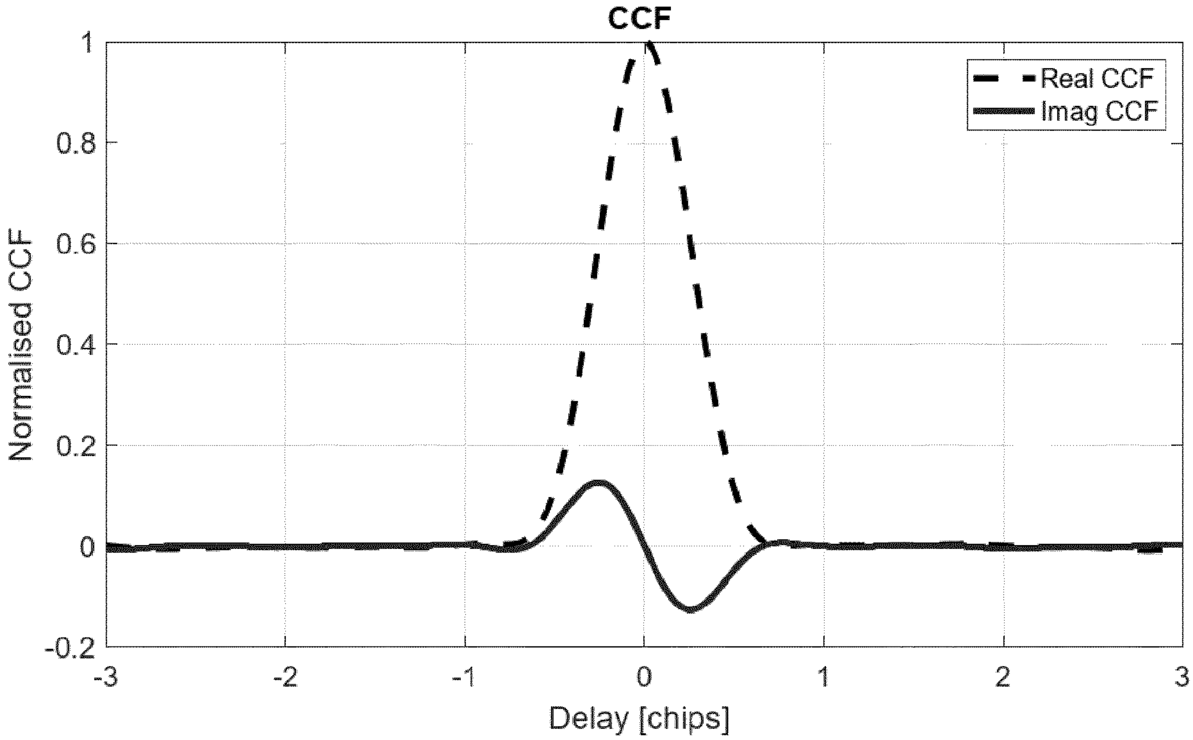


Figure 8

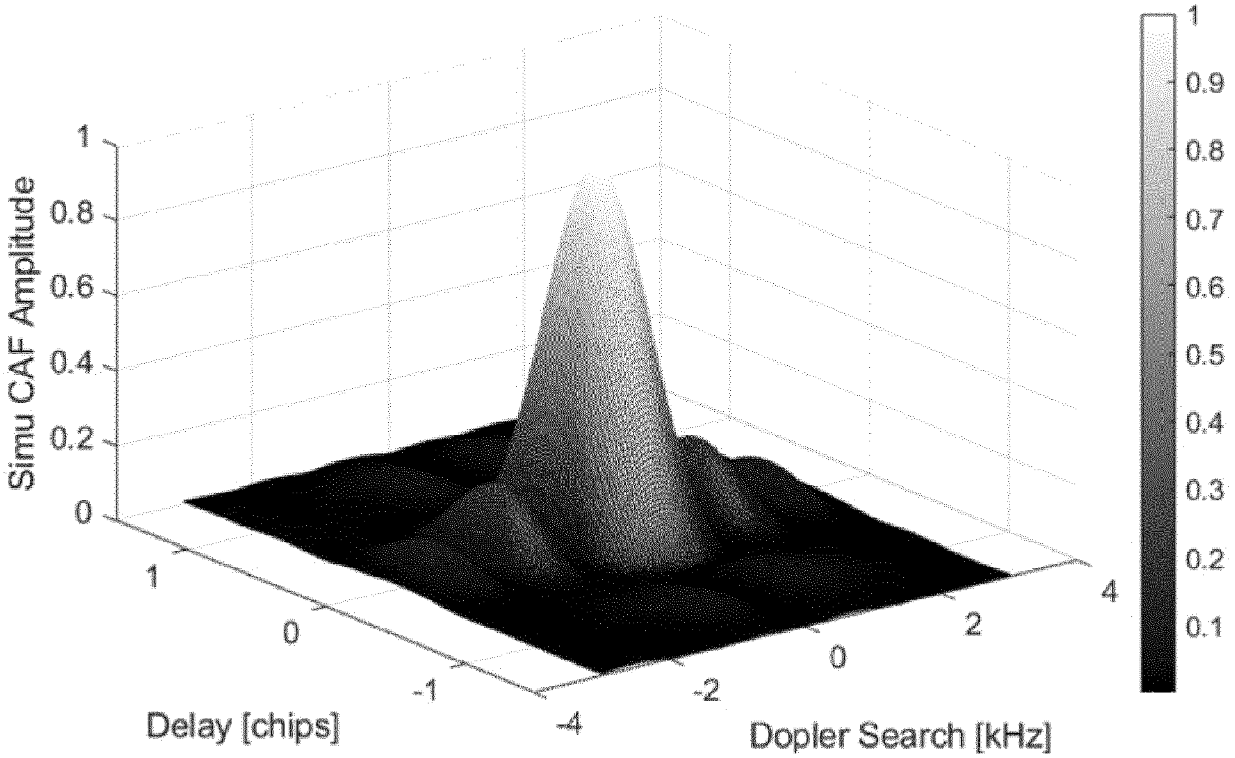


Figure 9

Figure 10

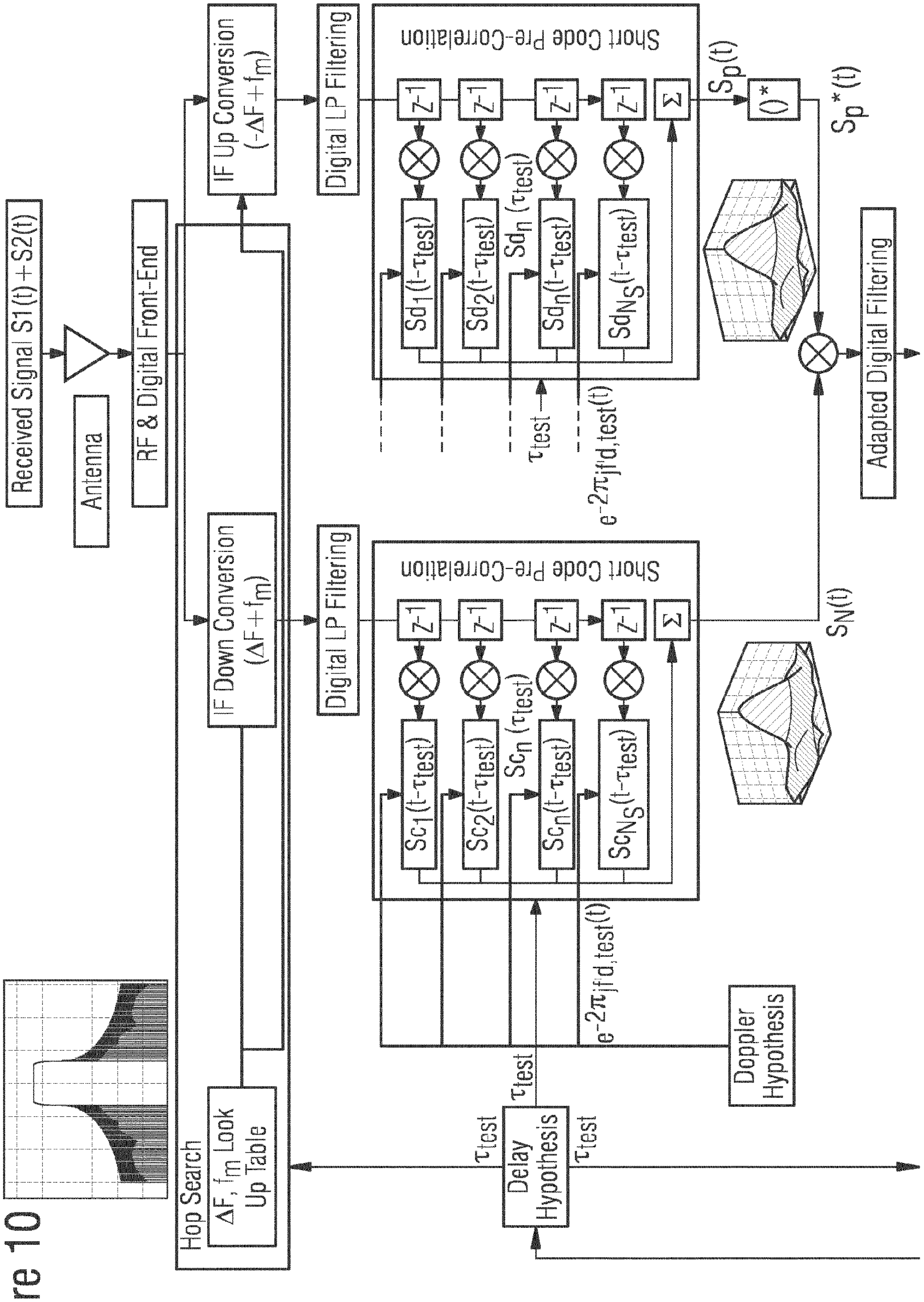

Received Signal S1(t) + S2(t)
Antenna
RF & Digital Front-End
IF Up Conversion (-ΔF + f_m)
IF Down Conversion (ΔF + f_m)
Digital LP Filtering
Digital LP Filtering
Short Code Pre-Correlation
Short Code Pre-Correlation
Sd_1(t-τ_test)
Sd_2(t-τ_test)
Sd_n(t-τ_test)
Sd_NS(t-τ_test)
Sd_n (τ_test)
Sc_1(t-τ_test)
Sc_2(t-τ_test)
Sc_n(t-τ_test)
Sc_NS(t-τ_test)
Sc_n (τ_test)
z^-1
Σ
S_p(t)
()*
S_p*(t)
S_N(t)
τ_test
e^-2πjf'd,test(t)
Adapted Digital Filtering
Hop Search
ΔF, f_m Look Up Table
Delay Hypothesis
Doppler Hypothesis

Figure 10 (cotd.)

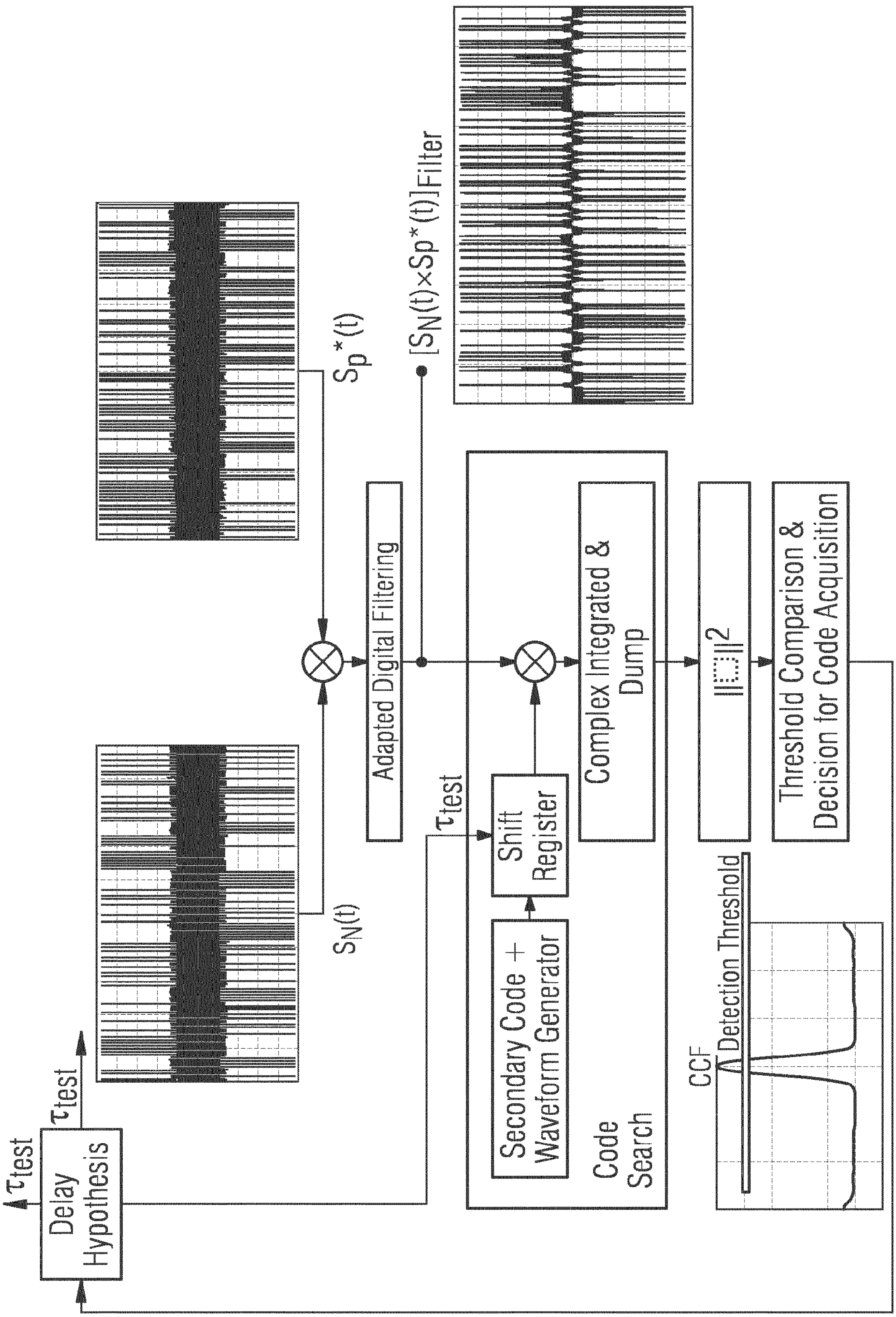

Figure 11

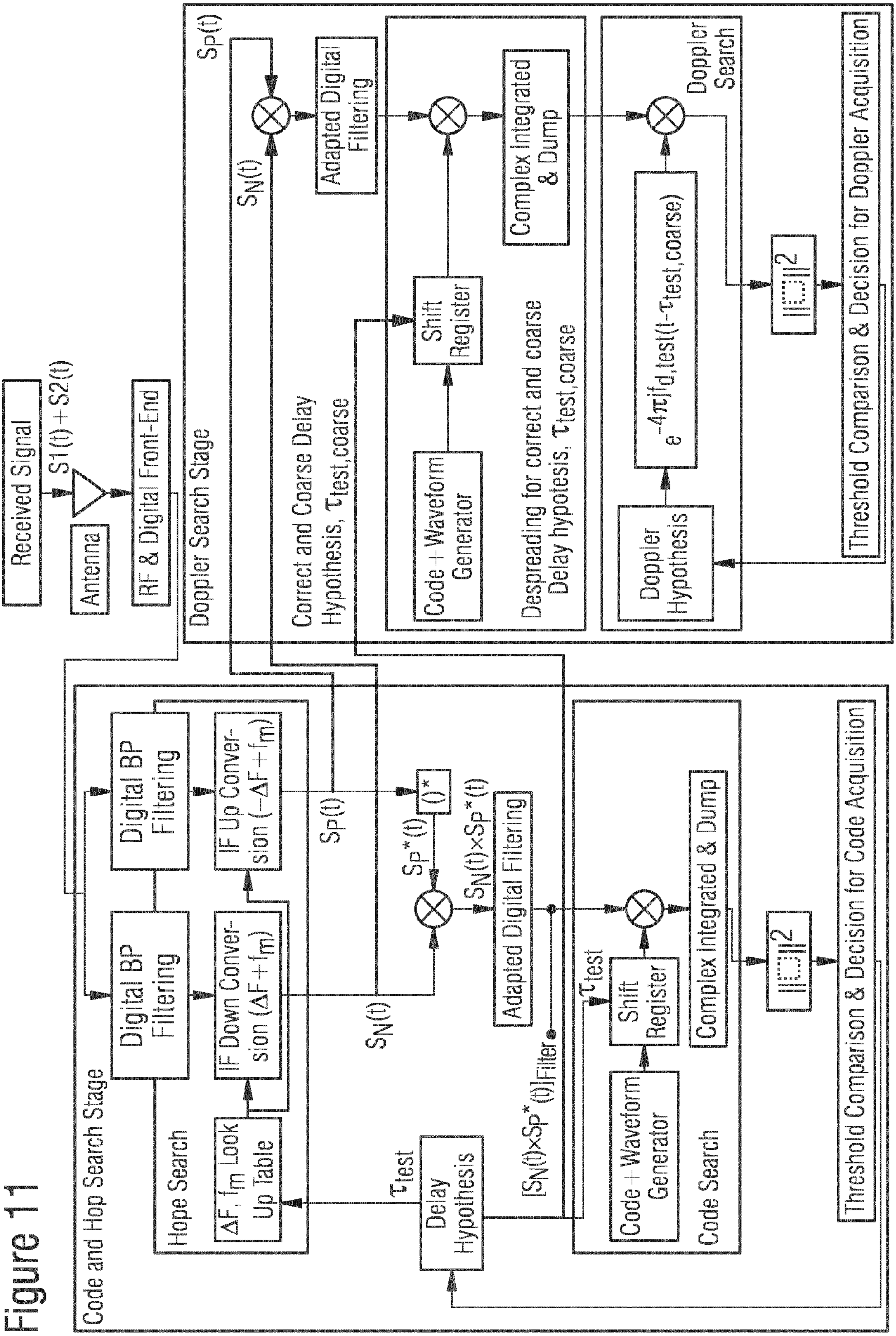
Received Signal
S1(t)+S2(t)
Antenna
RF & Digital Front-End
Doppler Search Stage
Sp(t)
SN(t)
Adapted Digital Filtering
Correct and Coarse Delay Hypothesis, τtest,coarse
Shift Register
Complex Integrated & Dump
Code+Waveform Generator
Despreading for correct and coarse Delay hypotesis, τtest,coarse
Doppler Search
e-4πjfd,test(t-τtest,coarse)
Doppler Hypothesis
||[]||2
Threshold Comparison & Decision for Doppler Acquisition
Code and Hop Search Stage
Digital BP Filtering
Digital BP Filtering
IF Down Conversion (ΔF+fm)
IF Up Conversion (−ΔF+fm)
Hope Search
ΔF, fm Look Up Table
SN(t)
SP(t)
()*
SP*(t)
SN(t)×SP*(t)
Adapted Digital Filtering
τtest
Delay Hypothesis
[SN(t)×SP*(t)]Filter
τtest
Shift Register
Complex Integrated & Dump
Code+Waveform Generator
Code Search
||[]||2
Threshold Comparison & Decision for Code Acquisition

Figure 12

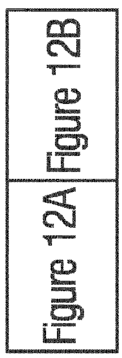


Figure 12A

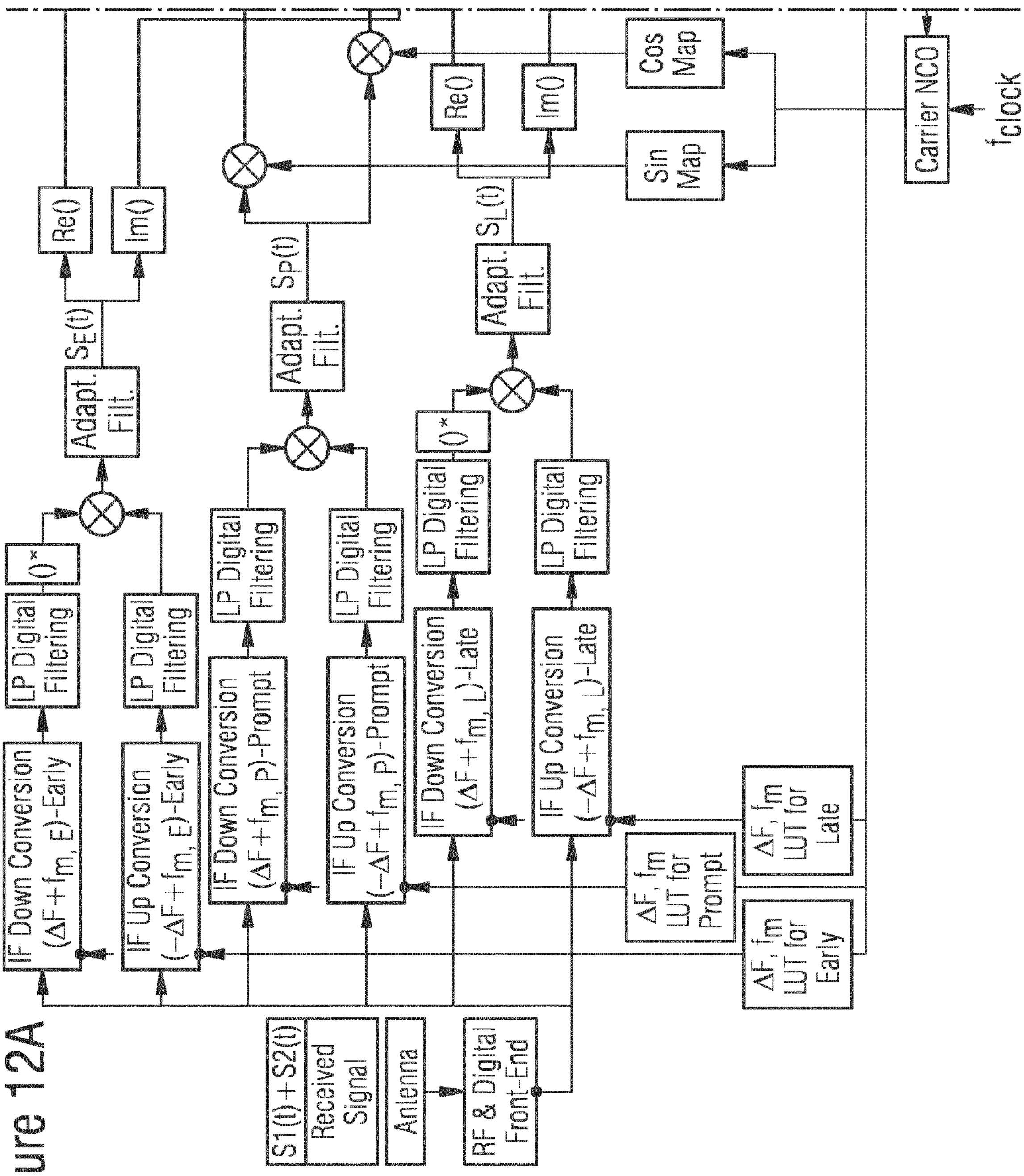

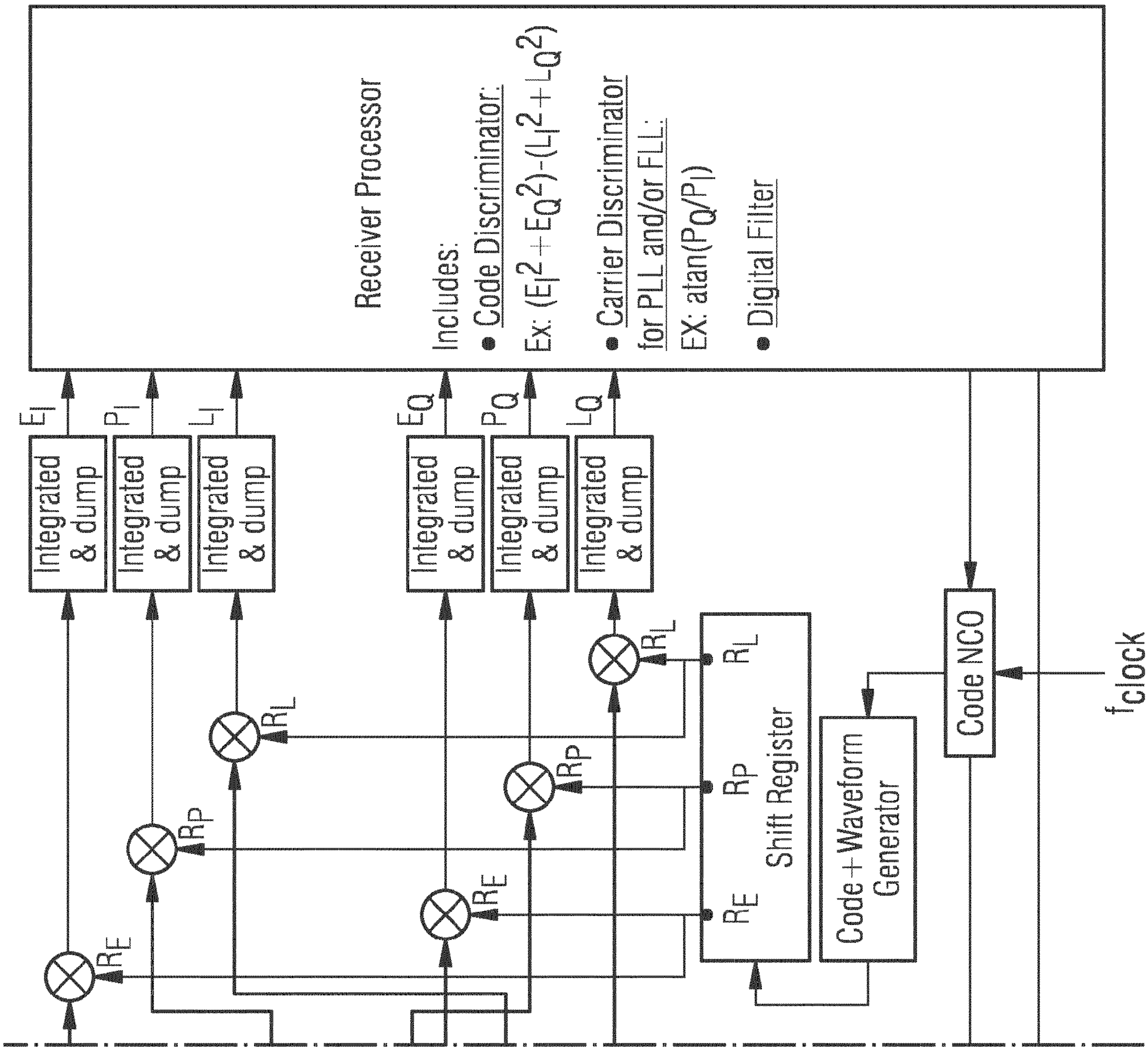
Receiver Processor
Includes:
• Code Discriminator:
Ex: $(E_I^2+E_Q^2)-(L_I^2+L_Q^2)$
• Carrier Discriminator
for PLL and/or FLL:
EX: $atan(P_Q/P_I)$
• Digital Filter
$E_I$
$P_I$
$L_I$
$E_Q$
$P_Q$
$L_Q$
Integrated & dump
Integrated & dump
Integrated & dump
Integrated & dump
Integrated & dump
Integrated & dump
$R_E$
$R_P$
$R_L$
$R_E$
$R_P$
$R_L$
$R_E$ $R_P$ $R_L$
Shift Register
Code + Waveform Generator
Code NCO
$f_{clock}$

Figure 12B

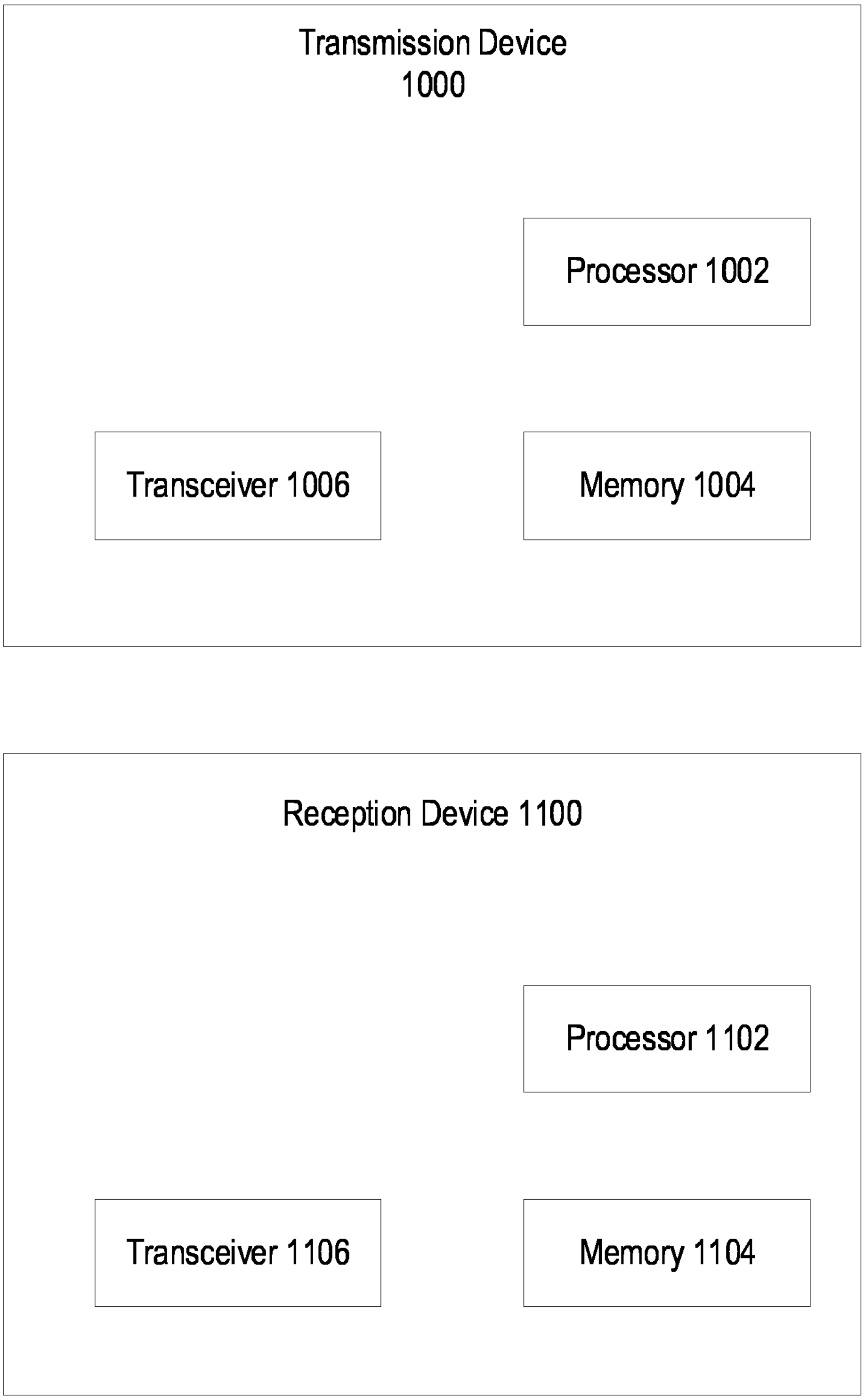
Transmission Device
1000
Processor 1002
Transceiver 1006
Memory 1004
Reception Device 1100
Processor 1102
Transceiver 1106
Memory 1104

Figure 13

Europäisches Patentamt
European Patent Office
Office européen des brevets

# EUROPEAN SEARCH REPORT

Application Number
EP 24 17 1817

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP 2001 168771 A (TOSHIBA CORP) 22 June 2001 (2001-06-22)<br>* the whole document *<br>----- | 1-4,8, 10,14,15<br>5-7,9, 11-13 | INV. H04B1/713<br>ADD. G01S19/00 H04B1/707 |
| A | EP 3 454 090 A1 (AIRBUS DEFENCE & SPACE GMBH [DE]) 13 March 2019 (2019-03-13)<br>* paragraph [0001] - paragraph [0020] *<br>* paragraph [0027] - paragraph [0034] *<br>* paragraph [0185] - paragraph [0206] *<br>* figures 1-7,25-28 *<br>----- | 1-15 | |

| TECHNICAL FIELDS SEARCHED (IPC) |
|---|
| H04B<br>G01S |

The present search report has been drawn up for all claims

1

| Place of search | Date of completion of the search | Examiner |
|---|---|---|
| Munich | 25 September 2024 | Gardella, Simone |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 1817

This annex lists the patent family members relating to the patent documents cited in the above-mentioned European search report. The members are as contained in the European Patent Office EDP file on
The European Patent Office is in no way liable for these particulars which are merely given for the purpose of information.

25-09-2024

| Patent document cited in search report | Publication date | Patent family member(s) | Publication date |
|---|---|---|---|
| JP 2001168771 A | 22-06-2001 | JP 3898403 B2 | 28-03-2007 |
| | | JP 2001168771 A | 22-06-2001 |
| EP 3454090 A1 | 13-03-2019 | EP 3454090 A1 | 13-03-2019 |
| | | WO 2019048341 A1 | 14-03-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **J. ANDERSON et al.** *Cryptographic Ranging Authentication with TESLA, Rapid Rekeying, and a PRF*
- CBFH: Coherent Binary Frequency-Hopping Multiplexing for BeiDou B2 Signal. **Z. ZHOU et al.** China Satellite